# EUROPÄISCHE PATENTSCHRIFT

(11) **EP 0 741 605 B1**
(45) Veröffentlichungstag und Bekanntmachung des Hinweises auf die Patenterteilung: **29.12.1999**
(21) Anmeldenummer: 95940250.4
(22) Anmeldetag: 28.11.1995
(51) Int. Cl.: B01J 19/20, B01J 19/18, B01J 10/02, C01B 13/02, H01S 3/095

(54) **GENERATOR UND VERFAHREN ZUR ERZEUGUNG EINES PRODUKTGASES**
GAS GENERATOR AND METHOD OF PRODUCING A GAS
GENERATEUR DE GAZ ET PROCEDE DE PRODUCTION D'UN GAZ

(30) Priorität: 29.11.1994 DE 4442463
(43) Veröffentlichungstag der Anmeldung: 13.11.1996
(73) Patentinhaber: Deutsches Zentrum für Luft- und Raumfahrt e.V., 53175 Bonn (DE)
(72) Erfinder: SCHALL, Wolfgang, D-71111 Waldenbuch (DE); BOHN, Willy, L., D-70569 Stuttgart (DE)
(74) Vertreter: Beck, Jürgen, Dr. Dipl.-Phys.
(86) Internationale Anmeldenummer: EP9504672
(87) Internationale Veröffentlichungsnummer: WO9616732

(56) Entgegenhaltungen:
- US-A- 5 229 100
- PATENT ABSTRACTS OF JAPAN vol. 13 no. 496 (E-843) ,9.November 1989 & JP,A,01 200685 (KAWASAKI HEAVY IND. LTD.) 11.August 1989,
- SOVIET JOURNAL OF QUANTUM ELECTRONICS, Bd. 21, Nr. 7, Juli 1991 WOODBURY, NEW YORK US, Seiten 747-753, XP 000246422 M.V.ZAGIDULLIN ET AL. 'HIGHLY EFFICIENT JET O2 (1 DELTA) GENERATOR'
- PATENT ABSTRACTS OF JAPAN vol. 11 no. 53 (C-404) ,19.Februar 1987 & JP,A,61 216717 (NEC CORP.) 26.September 1986, & DATABASE WPI Section Ch, Week 8645 Derwent Publications Ltd., London, GB; Class D05, AN 86-295023 & JP,A,61 216 717 (NEC CORP.)

## Beschreibung

Die vorliegende Erfindung betrifft einen Generator zur Erzeugung eines Produktgases durch chemische Reaktion zwischen einem Eduktgas und einer Flüssigkeit, umfassend eine geschlossene Reaktionskammer mit einer Flüssigkeitszufuhr, einer Flüssigkeitsabfuhr, einer Eduktgaszufuhr, einer Produktgasabfuhr, einem innerhalb der Reaktionskammer angeordneten Flüssigkeitsbad und einem in der Reaktionskammer drehbar angeordneten Substratkörper, dessen Drehachse so angeordnet ist, daß zumindest ein Teil der Oberfläche des Substratkörpers während einer Drehung desselben abwechselnd in das Flüssigkeitsbad eintaucht und von der Flüssigkeit benetzt aus dem Flüssigkeitsbad auftaucht.

Solche Generatoren sind aus der Literatur bekannt.

Insbesondere offenbart der Artikel von P.V. Avizonis, G. Hasen und K.A. Truesdell, "The Chemically Pumped Oxygen-Iodine Laser", SPIE, Band 1225 High-Power Gas Lasers (1990), Seiten 448 bis 476, einen solchen Generator zur Erzeugung von elektronisch angeregtem Sauerstoffgas durch chemische Reaktion zwischen Chlorgas und basisch gemachtem Wasserstoffperoxid (abgekürzt BHP nach der englischen Bezeichnung "basic hydrogen peroxide"), wobei das elektronisch angeregte Sauerstoffgas zum Betrieb eines chemischen Sauerstoff-Jod-Lasers (abgekürzt COIL nach der englischen Bezeichnung "chemically pumped oxygen-iodine laser") verwendet wird.

Bei diesem Generator umfaßt der Substratkörper mehrere dünne Metallscheiben, die parallel zueinander auf einer Welle aufgereiht sind und ungefähr zur Hälfte in die BHP eintauchen. Die Welle und mit ihr die Metallscheiben werden mittels eines außerhalb der Reaktionskammer angeordneten Motors in Drehung versetzt, wobei die Oberfläche der Metallscheiben während einer Drehung derselben abwechselnd in die BHP eintaucht und mit einem Flüssigkeitsfilm aus BHP versehen aus dieser auftaucht.

Die aufgetauchten Bereiche der Metallscheiben werden parallel zu ihrer Oberfläche mit Chlorgas beblasen. Dabei diffundieren Chlormoleküle einige 100 Nanometer in die BHP hinein, wo das Chlor mit Wasserstoffperoxid und der Lauge zu elektronisch angeregtem Sauerstoff, Wasser und einem Chlorid reagiert.

Der entstehende elektronisch angeregte Sauerstoff diffundiert aus der BHP heraus in einen Gasraum der Reaktionskammer und strömt in einen Strömungskanal des chemischen Sauerstoff-Jod-Lasers ab, wo Joddampf in das elektronisch angeregte Sauerstoffgas injiziert wird. Durch Stöße von elektronisch angeregten Sauerstoffmolekülen mit Jodmolekülen werden letztere dissoziiert. Auf die entstehenden Jodatome wird die Anregungsenergie weiterer elektronisch angeregter Sauerstoffmoleküle durch Stöße nahezu verlustfrei übertragen.

Die angeregten Jodatome und der Sauerstoff werden durch eine Überschalldüse in einen Resonator des chemischen Sauerstoff-Jod-Lasers expandiert, wo die angeregten Jodatome ihre Anregungsenergie durch stimulierte Emission von Photonen abgeben, so daß in bekannter Weise ein Laserstrahl entsteht.

Ein Nachteil des bekannten Generators besteht darin, daß der Substratkörper von einem außerhalb der Reaktionskammer angeordneten Motor in Drehung versetzt wird, so daß eine aufwendige Konstruktion für die Durchführung der Welle durch die Wand der geschlossenen Reaktionskammer erforderlich ist. Da das Innere der Reaktionskammer in der Regel unter einem geringen Druck von beispielsweise 50 Millibar steht, muß diese Durchführung luftdicht sein. Ferner darf aus der Abdichtung kein Schmierfett oder Öl in die Reaktionskammer eintreten, wo diese Stoffe mit der BHP reagieren könnten.

Der Erfindung lag daher die Aufgabe zugrunde, einen Generator der eingangs beschriebenen Art derart zu verbessern, daß auf einen außerhalb der Reaktionskammer angeordneten Motor zur Drehung des Substratkörpers verzichtet werden kann und das Erfordernis einer druckdichten Durchführung einer Antriebswelle des Substratkörpers durch eine Wand der Reaktionskammer entfällt.

Diese Aufgabe wird bei einem Generator der vorstehend genannten Art erfindungsgemäß dadurch gelöst, daß der Generator einen Strömungserzeuger zur Erzeugung einer kontinuierlichen Strömung der Flüssigkeit in der Reaktionskammer umfaßt und daß der Substratkörper mindestens einen Impulsaufnehmer zur Aufnahme eines Teils des Impulses der Strömung der Flüssigkeit und zur Erzeugung einer Drehbewegung des Substratkörpers um seine Drehachse umfaßt.

Das erfindungsgemäße Konzept bietet den Vorteil, daß die Flüssigkeit den zur Erzeugung einer Drehung des Substratkörpers erforderlichen Impuls über den oder die Impulsaufnehmer innerhalb der Reaktionskammer auf den Substratkörper überträgt, ohne daß es dazu einer gasdichten Durchführung beweglicher Teile durch eine Wand der Reaktionskammer bedarf.

Ferner wird durch die kontinuierliche Strömung der Flüssigkeit in der Reaktionskammer erreicht, daß die Oberfläche des Substratkörpers stets von unverbrauchter Flüssigkeit überspült und benetzt wird, so daß eine Anreicherung der Reaktionsprodukte in der den Substratkörper benetzenden Flüssigkeit ausbleibt, welche die Ausbeute der chemischen Reaktion zwischen dem Eduktgas und der Flüssigkeit mindern würde.

Auch bei der chemischen Reaktion freiwerdende Wärme wird von der kontinuierlichen Strömung der Flüssigkeit abgeführt, so daß eine die Ausbeute der chemischen Reaktion verringernde Aufheizung der den Substratkörper benetzenden Flüssigkeit vermieden wird.

Die den Substratkörper benetzende Flüssigkeit kann beispielsweise von einem Trägermaterial des Substratkörpers aufgesogen werden, Hohlräume in einem porösen Trägermaterial des Substratkörpers füllen oder isolierte Tröpfchen an dessen Oberfläche bilden. Vorzugsweise bildet die den Substratkörper benetzende Flüssigkeit einen die Oberfläche desselben überziehenden Flüssigkeitsfilm.

Vorteilhafterweise umfaßt der Generator eine Einrichtung zur Erzeugung einer kontinuierlichen Strömung des Eduktgases in der Reaktionskammer. Dadurch wird erreicht, daß der den Substratkörper benetzenden Flüssigkeit stets eine ausreichende Menge von Eduktgas zugeführt wird. Ferner erzeugt die kontinuierliche Strömung des Eduktgases durch Stöße der Gasteilchen untereinander eine ebensolche Strömung des Produktgases, so daß die bei der chemischen Reaktion in der Flüssigkeit an der Oberfläche des Substratkörpers entstehenden Produktgasteilchen rasch abgeführt werden.

Günstig ist es, wenn der Substratkörper mindestens ein Umlenkelement zum Umlenken der Strömung des Eduktgases auf die Oberfläche des Substratkörpers umfaßt. Dadurch wird erreicht, daß das Eduktgas auch dann, wenn der Substratkörper einen erheblichen Strömungswiderstand darstellt, nicht nur an Außenbereichen des Substratkörpers entlangströmt, sondern auch unzugänglichere Bereiche der Oberfläche des Substratkörpers überstreicht.

Besonders günstig ist es, wenn das oder die Umlenkelemente so ausgestaltet sind, daß sie die Strömung des Eduktgases im wesentlichen über die gesamte Oberfläche des Substratkörpers lenken, da die Ausbeute der chemischen Grenzflächenreaktion von der vom Eduktgas überstrichenen Oberfläche der den Substratkörper benetzenden Flüssigkeit abhängt und diese Oberfläche im genannten Fall maximal wird.

Bevorzugt werden die Impulsnehmer so ausgestaltet, daß sie zugleich als Unlenkelemente zur Umlenkung der Strömung des Eduktgases auf die Oberfläche des Substratkörpers dienen. Durch eine solche Kombination der Wirkungen lassen sich der konstruktive Aufwand und die Herstellungskosten vermindern.

Ferner ist es von Vorteil, wenn der Substratkörper mindestens ein Umlenkelement zum Umlenken einer Strömung des Produktgases zur Produktgasabfuhr hin umfaßt. Durch eine solche Maßnahme läßt sich das Produktgas rasch aus der Reaktionskammer entfernen. Dies ist insbesondere dann von Bedeutung, wenn die Produktgasteilchen nach ihrer Entstehung möglichst wenig miteinander und mit Wänden des Substratkörpers oder der Reaktionskammer stoßen sollen. Im Falle der Erzeugung elektronisch angeregten Sauerstoffgases ist dies der Fall, da die elektronisch angeregten Sauerstoffmoleküle in solchen Stößen ihre Anregungsenergie verlieren und damit zum Betreiben eines chemischen Sauerstoff-Jod-Lasers nicht mehr verwendet werden könnten.

Vorzugsweise übernehmen der oder die Impulsaufnehmer des Substratkörpers auch die Funktion von Umlenkelementen der Strömung des Produktgases, sind also zum Umlenken einer Strömung des Produktgases zur Produktgasabfuhr hin ausgestaltet. Durch eine solche Kombination der Wirkungen lassen sich die Produktionskosten des Generators senken.

Um das Produktgas möglichst rasch aus der Reaktionskammer abzuführen, wodurch unerwünschte Stöße der Produktgasteilchen untereinander und mit Wänden der Reaktionskammer oder des Substratkörpers vermieden werden, und um weitgehend zu verhindern, daß Eduktgas an dem Substratkörper vorbeifließt, ohne an dessen Oberfläche zu reagieren, schmiegt sich vorteilhafterweise die Form des Innenraums der Reaktionskammer oberhalb des innerhalb der Reaktionskammer angeordneten Flüssigkeitsbades der Form des Substratkörpers an.

Zur Ausgestaltung des Substratkörpers wurden bislang keine näheren Angaben gemacht.

Grundsätzlich ist jeder Körper als Substratkörper verwendbar, der in der Reaktionskammer drehbar angeordnet werden kann, dessen Oberfläche zumindest teilweise von der Flüssigkeit benetzbar ist und der als Impulsaufnehmer wirken kann oder an dem mindestens ein Impulsaufnehmer angeordnet werden kann.

So kann beispielsweise vorgesehen sein, daß der Substratkörper eine im wesentlichen zylindrische Walze umfaßt.

Demgegenüber läßt sich eine Vergrößerung der Oberfläche des Substratkörpers und damit der für die chemische Reaktion zur Verfügung stehenden Fläche erzielen, wenn der Substratkörper quer zu seiner Drehachse ausgerichtete Scheiben umfaßt.

Eine weitere Vergrößerung des Verhältnisses der Oberfläche des Substratkörpers zu dessen Volumen ergibt sich, wenn der Substratkörper vorteilhafterweise eine Vielzahl von Borsten umfaßt.

Zu der Art der Impulsaufnehmer des Substratkörpers wurden bislang noch keine näheren Angaben gemacht.

So kann beispielsweise vorgesehen sein, daß der Impulsaufnehmer mindestens eine Leitschaufel umfaßt. Solche Leitschaufeln können die Drehung des Substratkörpers in ähnlicher Weise wie die Schaufeln eines Mühlrades erzeugen.

Vor allem, wenn der oder die Impulsaufnehmer zugleich eine Strömung des Eduktgases und/oder eine Strömung des Produktgases umlenken sollen, kann es von Vorteil sein, wenn die Leitschaufeln in entsprechender Weise gekrümmt sind.

Alternativ oder ergänzend zu den Leitschaufeln kann der Impulsaufnehmer des Substratkörpers auch mindestens einen Propeller umfassen. Die Umdrehungsgeschwindigkeit des Substratkörpers im Verhältnis zu der Strömungsgeschwindigkeit der Flüssigkeit kann dabei durch entsprechende Verwindung der Propellerflügel beeinflußt werden.

Ferner kann ein Substratkörper mit Propellern leichter vom Eduktgas umströmt werden, wobei eine solche verbesserte Strömungsanpassung des Substratkörpers eine erhöhte Ausbeute der chemischen Reaktion zur Folge hat.

Ferner kann die Strömung des frei werdenden Produktgases durch den oder die Propeller einen Drall erhalten, so daß vorteilhafterweise von der Produktgasströmung mitgerissene Flüssigkeitstropfen aufgrund von Zentrifugalkräften aus derselben abgeschieden werden.

Ein optimaler Impulsübertrag von der Flüssigkeitsströmung auf den Substratkörper wird erreicht, wenn die Symmetrieachse des oder der Propeller im wesentlichen parallel zur Richtung der Strömung der Flüssigkeit in der Reaktionskammer ausgerichtet ist.

Alternativ oder ergänzend zu den bisher beschriebenen Impulsaufnehmern kann der Substratkörper auch eine Schnecke als Impulsaufnehmer umfassen.

Vorzugsweise wird dabei die Achse der Schnecke im wesentlichen parallel zur Drehachse des Substratkörpers und parallel zu der Richtung der Strömung der Flüssigkeit in der Reaktionskammer ausgerichtet.

Der mit einer solchen Schnecke versehene Substratkörper wird von der entlang der Drehachse strömenden Flüssigkeit in Umkehr des Prinzips einer Schneckenpumpe ("archimedischen Schraube") in Drehung versetzt.

Wird günstigerweise die Strömung der Flüssigkeit innerhalb der Reaktionskammer so geführt, daß die Flüssigkeit bei Anströmung der Wendelfläche der Schnecke nach unten gedrückt wird, so kann dadurch ein Überströmen von Flüssigkeit in die Produktgasabfuhr verhindert werden.

Zur Ausrichtung der Strömung des Eduktgases relativ zur Drehachse des Substratkörpers wurden bislang noch keine näheren Angaben gemacht.

Es kann beispielsweise vorgesehen sein, daß der Generator eine Einrichtung zur Erzeugung einer im wesentlichen parallel zur Drehachse des Substratkörpers in die Reaktionskammer eintretenden Strömung des Eduktgases umfaßt. Wird die Eduktgasströmung in dieser Weise geführt, kann insbesondere bei einem mit Propellern oder einer Schnecke versehenen Substratkörper eine gleichmäßige Beblasung der Propellerflügel bzw. der Wendelfläche der Schnecke erreicht werden.

Insbesondere bei hohen Strömungsgeschwindigkeiten des Eduktgases kann es jedoch günstiger sein, wenn der Generator eine Einrichtung zur Erzeugung einer im wesentlichen quer zur Drehachse des Substratkörpers in die Reaktionskammer eintretenden Strömung des Eduktgases umfaßt.

Im Falle eines mit einer Schnecke versehenen Substratkörpers kann die Einblasung des Eduktgases insbesondere parallel zur Wendelfläche der Schnecke, also um den Steigungswinkel der Schnecke gegen eine zur Schneckenachse senkrechte Ebene verdreht, erfolgen, um eine der Schneckengeometrie optimal angepaßte Eduktgasströmung zu erhalten.

Ferner ist es von Vorteil, wenn der Generator mehrere in der Reaktionskammer drehbar angeordnete Substratkörper umfaßt. Dadurch ergibt sich die Möglichkeit, die Art und Ausgestaltung der Impulsaufnehmer oder der Umlenkelemente auf innerhalb der Reaktionskammer örtlich variierende Strömungsverhältnisse der Flüssigkeit, des Eduktgases und/oder des Produktgases abzustimmen.

Dabei kann vorgesehen sein, daß der Generator mindestens zwei Substratkörper mit zueinander parallelen Drehachsen umfaßt.

Diese beiden Substratkörper mit zueinander parallelen Drehachsen können Impulsaufnehmer zur Erzeugung einer gleichsinnigen Drehung der Substratkörper oder alternativ dazu Impulsaufnehmer zur Erzeugung einer gegensinnigen Drehung der Substratkörper umfassen.

Bei einer gleichsinnigen Drehung der Substratkörper bleibt ein der Edukt- oder Produktgasströmung von an den Substratkörpern angeordneten Umlenkelementen verliehener Drall erhalten oder wird verstärkt.

Bei gegensinniger Drehung der beiden Substratkörper kann dagegen vorgesehen sein, daß die gegensinnig drehenden Substratkörper jeweils mindestens ein Umlenkelement zum Umlenken der Gasströmung umfassen, die so ausgestaltet sind, daß das oder die Umlenkelemente des einen Substratkörpers der Gasströmung einen Umlenkimpuls erteilen, der einem der Gasströmung von dem oder den Umlenkelementen des anderen Substratkörpers erteilten Umlenkimpuls entgegengerichtet ist. Auf diese Weise kann verhindert werden, daß an der Produktgasabfuhr eine drehende Gasströmung auftritt. Dies ist insbesondere dann erwünscht, wenn an die Produktgasabfuhr ein Strömungskanal angeschlossen ist, in dem eine gleichmäßige, störungsfreie Strömung des Produktgases erzeugt werden soll.

Besonders geeignet ist der erfindungsgemäße Generator zur Erzeugung von elektronisch angeregtem Sauerstoffgas (Produktgas) durch chemische Reaktion zwischen Chlorgas (Eduktgas) und in einer Lauge (beispielsweise Kalilauge) gelöstem Wasserstoffperoxid (Flüssigkeit).

Eine bevorzugte Ausgestaltung der Erfindung betrifft einen chemischen Sauerstoff-Jod-Laser, der mit von elektronisch angeregtem Sauerstoffgas auf Jodatome übertragener Anregungsenergie betrieben wird, wobei der chemische Sauerstoff-Jod-Laser einen erfindungsgemäßen Generator zur Erzeugung des elektronisch angeregten Sauerstoffgases umfaßt.

Ferner betrifft die Erfindung auch ein Verfahren zur Erzeugung eines Produktgases durch chemische Reaktion zwischen einem Eduktgas und einer Flüssigkeit, bei dem einer geschlossenen Reaktionskammer das Eduktgas und die Flüssigkeit zugeführt und das Produktgas und die Flüssigkeit entnommen werden und ein Substratkörper in der Reaktionskammer so um eine Drehachse gedreht wird, daß zumindest ein Teil der Oberfläche des Substratkörpers während einer Drehung desselben abwechselnd in ein innerhalb der Reaktionskammer angeordnetes Flüssigkeitsbad eintaucht und von der Flüssigkeit benetzt aus dem Flüssigkeitsbad auftaucht, bei dem die der Erfindung zugrundeliegende Aufgabe dadurch gelöst wird, daß eine kontinuierliche Strömung der Flüssigkeit in der Reaktionskammer erzeugt wird und daß mittels mindestens eines am Substratkörper angeordneten Impulsaufnehmers ein Teil des Impulses der Strömung der Flüssigkeit entnommen wird, um die Drehbewegung des Substratkörpers anzutreiben.

Der Vorteil des erfindungsgemäßen Verfahrens besteht darin, daß zum Antreiben der Drehbewegung des Substratkörpers keine beweglichen Teile durch eine Wand der Reaktionskammer geführt werden müssen, so daß keinerlei Probleme durch in die Reaktionskammer eintretende Dicht- oder Schmiermittel entstehen können.

Weitere vorteilhafte Ausgestaltungen des erfindungsgemäßen Verfahrens sowie eine bevorzugte Verwendung desselben sind Gegenstand der Ansprüche 27 bis 40, deren Vorteile bereits im Zusammenhang mit den vorteilhaften Ausgestaltungen des erfindungsgemäßen Generators genannt wurden.

Weitere Merkmale und Vorteile der Erfindung sind Gegenstand der folgenden Beschreibung und zeichnerischen Darstellung mehrerer Ausführungsbeispiele.

In der Zeichnung zeigen:
- Fig. 1: eine schematische Darstellung eines erfindungsgemäßen chemischen Sauerstoff-Jod-Lasers mit einem erfindungsgemäßen Generator zur Erzeugung von elektronisch angeregtem gasförmigem Sauerstoff durch chemische Reaktion zwischen gasförmigem Chlor und flüssigem BHP, hier einer Lösung von Wasserstoffperoxid in Kalilauge;
- Fig. 2: einen Längsschnitt durch die Reaktionskammer einer ersten Ausführungsform des erfindungsgemäßen Generators zur Erzeugung von elektronisch angeregtem gasförmigem Sauerstoff, dessen Substratkörper eine Mehrzahl parallel zueinander ausgerichteter Kreisscheiben umfaßt;
- Fig. 3: einen Schnitt durch die Reaktionskammer der ersten Ausführungsform des erfindungsgemäßen Generators längs der Linie 3-3 in Fig. 2;
- Fig. 4: einen Schnitt durch die Reaktionskammer der ersten Ausführungsform des erfindungsgemäßen Generators längs der Linie 4-4 in Fig. 2;
- Fig. 5: einen Schnitt ähnlich Fig. 2 durch die Reaktionskammer einer zweiten Ausführungsform des erfindungsgemäßen Generators, bei der der Innenraum der Reaktionskammer dem Substratkörper angepaßt ist;
- Fig. 6: einen Schnitt ähnlich Fig. 2 durch die Reaktionskammer einer dritten Ausführungsform des erfindungsgemäßen Generators, deren Substratkörper ebene Leitbleche als Impulsaufnehmer umfaßt;
- Fig. 7: einen Schnitt ähnlich Fig. 2 durch die Reaktionskammer einer vierten Ausführungsform des erfindungsgemäßen Generators, deren Substratkörper Borsten umfaßt;
- Fig. 8: einen Schnitt ähnlich Fig. 2 durch die Reaktionskammer einer fünften Ausführungsform des erfindungsgemäßen Generators, deren Substratkörper Propeller als Impulsaufnehmer umfaßt;
- Fig. 9: eine geschnittene Draufsicht auf die Reaktionskammer einer sechsten Ausführungsform des erfindungegemäßen Generators, deren Substratkörper eine Schnecke als Impulsaufnehmer umfaßt;
- Fig. 10: einen Schnitt ähnlich Fig. 2 durch die Reaktionskammer einer siebten Ausführungsform des erfindungsgemäßen Generators, die zwei sich gegensinnig zueinander drehende Substratkörper umfaßt.

Identische oder funktional äquivalente Elemente sind in allen Figuren mit denselben Bezugszeichen bezeichnet.

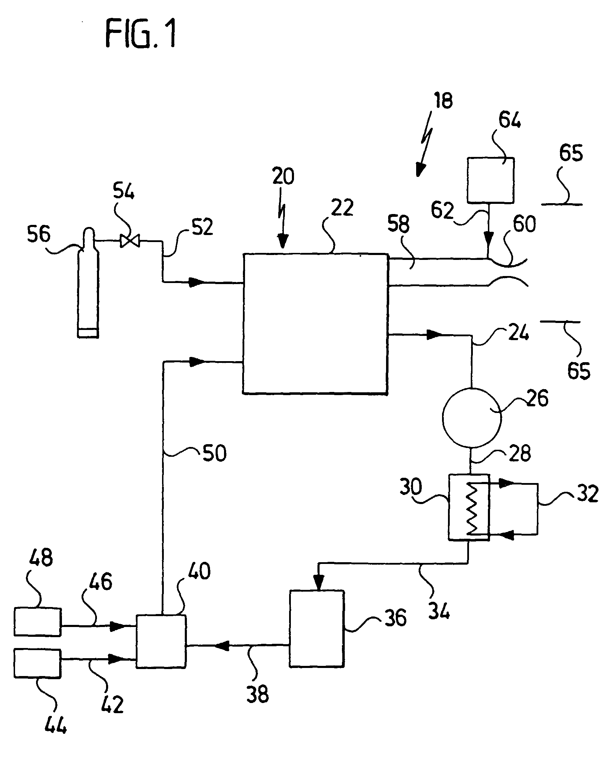

Ein in Fig. 1 dargestellter und als Ganzes mit 18 bezeichneter chemischer Sauerstoff-Jod-Laser umfaßt einen als Ganzes mit 20 bezeichneten Generator zur Erzeugung von elektronisch angeregtem Sauerstoffgas (Produktgas) durch chemische Reaktion zwischen gasförmigem Chlor (Eduktgas) und der Flüssigkeit BHP, der seinerseits eine Reaktionskammer 22 umfaßt, die in Fig. 1 schematisch dargestellt ist und weiter unten im einzelnen beschrieben werden wird.

Die Reaktionskammer 22 ist mittels einer Flüssigkeitsabführleitung 24, durch die der Reaktionskammer 22 BHP entnommen werden kann, mit einer Druckerhöhungspumpe 26 verbunden.

Von der Druckerhöhungspumpe 26 führt eine Zwischenleitung 28 zu einem Wärmetauscher 30, der warmseitig von der BHP und kaltseitig von einem in einem konventionellen Kühlmittelkreislauf 32 geführten Kühlmittel durchströmt wird.

Der Wärmetauscher 30 ist über eine weitere Zwischenleitung 34 mit einem Abscheider 36 zum Abscheiden von Kaliumchlorid und Wasser aus der BHP verbunden, von dem wiederum eine Zwischenleitung 38 zu einem Mischbehälter 40 führt.

Der Mischbehälter 40 ist für die Zugabe von Kalilauge und Wasserstoffperoxid zu der durchströmenden BHP über eine Zuführleitung für Kalilauge 42 mit einem Speicher für Kalilauge 44 und über eine Zuführleitung für Wasserstoffperoxid 46 mit einem Speicher für Wasserstoffperoxid 48 verbunden.

Von dem Mischbehälter 40 führt eine Flüssigkeitsrückführleitung 50 zurück zur Reaktionskammer 22, wodurch ein geschlossener Kreislauf für BHP entsteht.

Ferner ist die Reaktionskammer 22 über eine Eduktgaszuführleitung 52, die ein durchflußbegrenzendes Ventil 54 aufweist, mit einem Eduktgasspeicher 56, beispielsweise einer Chlorgasflasche, verbunden.

Darüber hinaus ist die Reaktionskammer 22 an einen Strömungskanal 58 des chemischen Sauerstoff-Jod-Lasers 18 angeschlossen, der an seinem der Reaktionskammer 22 abgewandten Ende eine Überschalldüse 60 aufweist.

In die Düse 60 mündet eine Joddampfzuleitung 62, deren freies Ende mit einem Joddampferzeuger 64 verbunden ist.

Die Düse 60 mündet ihrerseits in einen von zwei zueinander koaxialen Spiegeln 65, deren gemeinsame Achse senkrecht zur Achse der Düse 60 ausgerichtet ist, begrenzten Laserresonator.

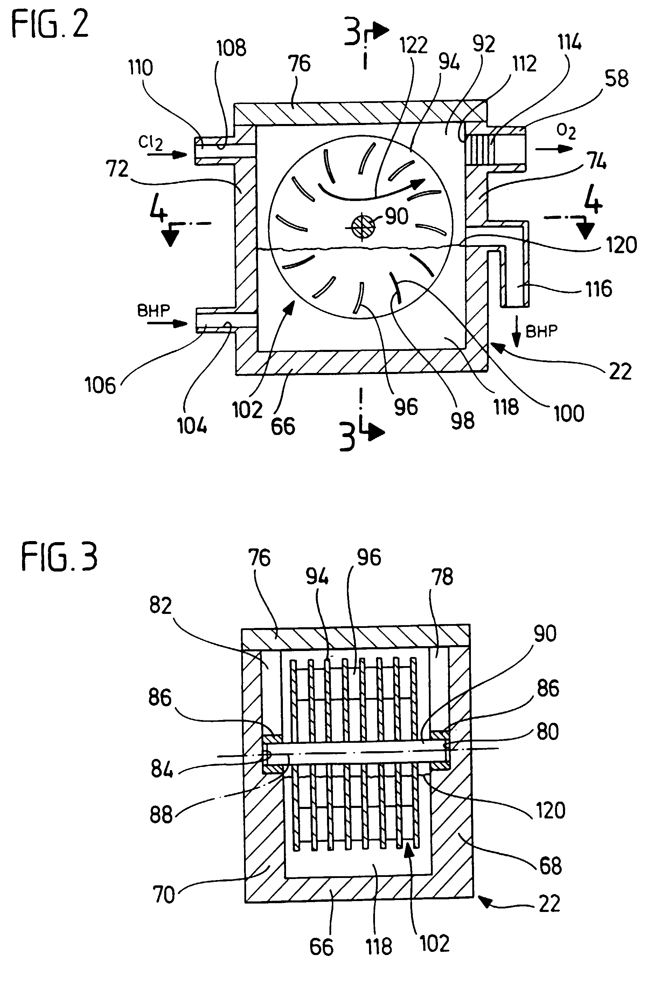

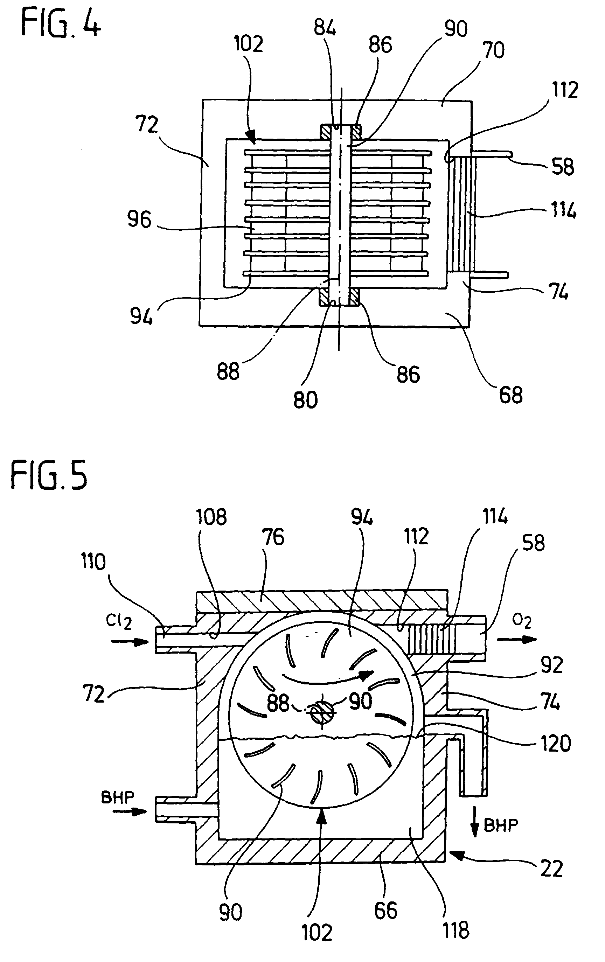

Der Aufbau der Reaktionskammer 22 gemäß einer ersten Ausführungsform des erfindungsgemäßen Generators 20 ist in den Fig. 2 bis 4 näher dargestellt.

Die Reaktionskammer 22 weist die Form eines Hohlquaders auf mit einem Boden 66, einer vorderen Seitenwand 68, einer hinteren Seitenwand 70, einer linken Seitenwand 72, einer rechten Seitenwand 74 sowie einem Deckel 76. Der Boden 66 und die Seitenwände 68, 70, 72 und 74 sind einstückig miteinander verbunden; der Deckel 76 ist abnehmbar und in seiner Schließstellung gasdicht mit den Seitenwänden 68, 70, 72 und 74 verbindbar.

Alle Wände 66, 68, 70, 72, 74 und 76 der Reaktionskammer 22 bestehen aus Material, das in möglichst geringem Umfange mit der BHP und mit Chlorgas reagiert und von der BHP nur wenig oder gar nicht angelöst wird.

Die vordere Seitenwand 68 weist an ihrer Innenseite eine Ausnehmung 78 mit rechteckigem Querschnitt auf, die sich von der Mitte des oberen Randes der vorderen Seitenwand 68 vertikal bis ungefähr zur Mitte der Innenseite der vorderen Seitenwand 68 erstreckt, wo sie in einen ausgenommenen Endbereich 80 mündet, welcher die Form eines sich nach unten auswölbenden halbierten Kreiszylinders aufweist, dessen Schnittfläche horizontal und dessen Achse senkrecht zu der vorderen Seitenwand 68 ausgerichtet ist. Tiefe und Durchmesser des Endbereichs 80 entsprechen der Tiefe bzw. der Breite der Ausnehmung 78.

Die hintere Seitenwand 70 weist an ihrer Innenseite ebenfalls eine Ausnehmung 82 mit einem Endbereich 84 auf, die entsprechend der Ausnehmung 78 bzw. dem Endbereich 80 ausgebildet sind und diesen spiegelbildlich gegenüberliegen.

Die Begrenzungswand jedes der Endbereiche 80, 84 trägt eine hohlzylindrische Lagerbuchse 86, deren Außendurchmesser geringfügig kleiner ist als der Durchmesser des Endbereiches 80 bzw. 84. Die gemeinsame Achse der Lagerbuchsen 86 ist senkrecht zu der vorderen Seitenwand 68 und zu der hinteren Seitenwand 70 ausgerichtet.

Eine an ihren beiden Enden in den Lagerbuchsen 86 um eine Drehachse 88 drehbar gelagerte Welle 90 erstreckt sich von der vorderen Seitenwand 68 zu der hinteren Seitenwand 70 durch einen von den Wänden 66, 68, 70, 72, 74 und 76 der Reaktionskammer 22 umschlossenen Innenraum 92 der Reaktionskammer 22.

Die Welle 90 durchsetzt mehrere, beispielsweise acht, flache, kreiszylindrische, zu der Welle 90 koaxiale Scheiben 94, die drehfest mit der Welle 90 verbunden sind. Alle Scheiben 94 weisen dieselbe Dicke und denselben Durchmesser auf, der etwas kleiner ist als die Breite der Innenseite der vorderen Seitenwand 68. Längs der Welle 90 sind die Scheiben 94 äquidistant zueinander angeordnet.

Zwischen den Scheiben 94 sind Leitschaufeln 96 angeordnet, die sich in Richtung der Drehachse 88 von einer Stirnfläche einer Scheibe 94 zu der dieser zugewandten Stirnfläche einer benachbarten Scheibe 94 und in radialer Richtung von nahezu dem äußeren Umfang der Scheiben 94 um etwa ein Viertel des Durchmessers der Scheiben 94 auf die Welle 90 zu erstrecken. Dabei sind die Leitschaufeln 96 in Ebenen parallel zu den Stirnflächen der Scheiben 94 gekrümmt, so daß die Leitschaufeln 96 jeweils eine konkave Vorderseite 98 und eine konvexe Rückseite 100 aufweisen. Ihre konkaven Vorderseiten 98 weisen in der der linken Seitenwand 72 der Reaktionskammer 22 zugewandten Hälfte des Innenraums 92 nach oben, während sie in der der rechten Seitenwand 74 der Reaktionskammer 22 zugewandten Hälfte des Innenraums 92 nach unten weisen.

Zwischen je zwei einander benachbarten Scheiben 94 sind beispielsweise 12 Leitschaufeln 96 angeordnet, wobei der Winkelabstand benachbarter Leitschaufeln 96 bezüglich der Drehachse 88 konstant ist.

Die Welle 90, die Scheiben 94 und die Leitschaufeln 96 bilden zusammen einen Substratkörper 102.

Die linke Seitenwand 72 wird nahe ihres unteren Randes senkrecht zu ihrer Oberfläche von mehreren Eintrittsbohrungen für BHP 104 durchsetzt, die längs der gesamten Breite der Innenseite der linken Seitenwand 72 äquidistant angeordnet sind. Die Eintrittsbohrungen für BHP 104 sind über Eintrittsrohre 106 und eine (nicht dargestellte) Rohrverzweigung an die Flüssigkeitsrückführleitung 50 angeschlossen.

Ferner wird die linke Seitenwand 72 nahe ihres oberen Randes senkrecht zu ihrer Oberfläche von mehreren Eintrittsbohrungen für Chlorgas 108 durchsetzt, die längs der gesamten Breite der Innenseite der linken Seitenwand 72 äquidistant angeordnet sind. Die Eintrittsbohrungen für Chlorgas 108 sind über Eintrittsrohre 110 und eine (nicht dargestellte) Rohrverzweigung an die Eduktgaszuführleitung 52 angeschlossen.

Die rechte Seitenwand 74 weist nahe ihres oberen Randes eine Austrittsöffnung für Sauerstoffgas 112 auf, die sich über nahezu die gesamte Breite der Innenseite der rechten Seitenwand 74 erstreckt und gasdicht an den Strömungskanal 58 des chemischen Sauerstoff-Jod-Lasers 18 angeschlossen ist.

In der Austrittsöffnung für Sauerstoffgas 112 ist ein Tropfenseparator 114 zur Abtrennung von Flüssigkeitstropfen aus dem Gasstrom angeordnet.

Ferner weist die rechte Seitenwand 74 eine Überlauföffnung 116 auf, deren unterer Rand etwas tiefer als ein unterer Rand der Welle 90 angeordnet ist. Die Überlauföffnung 116 ist an die Flüssigkeitsabführleitung 24 angeschlossen.

Ein unterer Bereich des Innenraums 92 der Reaktionskammer 22 wird von einem Flüssigkeitsbad 118 aus BHP eingenommen, dessen Flüssigkeitsspiegel 120 auf gleicher Höhe mit dem unteren Rand der Überlauföffnung 116 liegt und in das die unteren Bereiche der Scheiben 94 des Substratkörpers 102 mit den an diesen Bereichen angeordneten Leitschaufeln 96 eintauchen.

Während des Betriebes des Generators 20 zur Erzeugung von elektronisch angeregtem Sauerstoff wird mittels der Druckerhöhungspumpe 26 ein BHP-Kreislauf von der Reaktionskammer 22 durch den Wärmetauscher 30, den Abscheider 36 und den Mischbehälter 40 in die Reaktionskammer 22 zurück aufrechterhalten.

Innerhalb des Flüssigkeitsbades 118 der Reaktionskammer 22 entsteht dadurch eine von den Eintrittsbohrungen für BHP 104 zu der Überlauföffnung 116 hin gerichtete BHP-Strömung. Die gekrümmten Leitschaufeln 96, die sich innerhalb des Flüssigkeitsbades 118 befinden, werden auf ihren konkaven Vorderseiten 98 von der BHP angeströmt, nehmen einen Teil des Impulses der Flüssigkeitsströmung auf und übertragen ihn auf den Substratkörper 102, der dadurch in Drehung um die Drehachse 88 versetzt wird (in Fig. 2 entgegen dem Uhrzeigersinn). Die Drehgeschwindigkeit des Substratkörpers 102 hängt dabei von dem Durchsatz an BHP durch die Reaktionskammer 22 pro Zeiteinheit und damit von dem Massendurchsatz durch die Druckerhöhungspumpe 26 ab.

Günstige Drehzahlen liegen beispielsweise im Bereich von 10 bis 100 Umdrehungen pro Minute, da bei solch vergleichsweise niedrigen Drehzahlen die Reibung in den Lagerbuchsen 86 relativ gering ist, so daß ungeschmierte Kunststoffgleitlagerbuchsen verwendet werden können.

Im Verlaufe einer Drehung des Substratkörpers 102 um die Drehachse 88 taucht jede der Leitschaufeln 96 und der größte Teil der Oberfläche der Scheiben 94 in das Flüssigkeitsbad 118 ein, so daß diese von der zähflüssigen BHP benetzt werden und ein dünner BHP-Flüssigkeitsfilm auf den aus dem Flüssigkeitsbad 118 auftauchenden Bereichen des Substratkörpers 102 zurückbleibt.

Von dem Eduktgasspeicher 56 bei geöffnetem Ventil 54 durch die Eduktgaszuführleitung 52, die (nicht dargestellte) Rohrverzweigung, die Eintrittsrohre 110 und die Eintrittsbohrungen für Chlorgas 108 in den oberen Bereich des Innenraumes 92 der Reaktionskammer 22 einströmendes Chlorgas strömt die konvexen Rückseiten 100 derjenigen Leitschaufeln 96 an, die sich gerade außerhalb des Flüssigkeitsbades 118 befinden, und wird von diesen zur Drehachse 88 hin umgelenkt. Dadurch wird erreicht, daß eine ausreichende Menge von Chlorgas nicht nur die umfangnahen Bereiche der Scheiben 94, sondern auch deren drehachsnahe Bereiche überstreicht. Die mittels der als Umlenkelemente wirkenden Leitschaufeln 96 geführte Gasströmung ist in Fig. 2 durch den Pfeil 122 angedeutet.

Im Verlauf einer vollständigen Drehung des Substratkörpers 102 wird durch die Umlenkung der Chlorgasströmung zur Drehachse 88 hin im wesentlichen die gesamte Oberfläche des Substratkörpers 102 von Chlorgas überstrichen, was ohne die als Umlenkelemente wirkenden Leitschaufeln 96, insbesondere bei nur geringem Abstand der Scheiben 94, nicht der Fall wäre.

Beim Vorbeiströmen an der Oberfläche des Substratkörpers 102 diffundieren Chlormoleküle einige hundert Nanometer in den die Oberfläche des Substratkörpers überziehenden Flüssigkeitsfilm hinein und reagieren mit dem in der BHP enthaltenen Wasserstoffperoxid und dem Kaliumhydroxid gemäß der Reaktion:

H₂O₂ + 2 KOH + Cl₂ ⇒ O₂ (¹Δ) + 2 KCl + 2 H₂O

zu elektronisch angeregtem Sauerstoff, Kaliumchlorid und Wasser.

Der Sauerstoff entsteht dann überwiegend in der gewünschten, elektronisch angeregten Form, wenn der Partialdruck des Chlorgases im Innenraum 92 der Reaktionskammer 22 sehr niedrig ist, beispielsweise einige Millibar beträgt. Wird im Innenraum 92 der Reaktionskammer 22 ein höherer Gesamtgasdruck von beispielsweise mindestens 50 Millibar benötigt, um an der Überschalldüse 60 eine erwünschte Gasströmung zu erzeugen, so kann dieser Gesamtgasdruck durch Hinzufügen eines inerten Gases zum Chlorgas erreicht werden.

Der bei der oben angegebenen chemischen Reaktion entstandene elektronisch angeregte Sauerstoff diffundiert aus dem Flüssigkeitsfilm an der Oberfläche des Substratkörpers heraus, strömt auf die rechte Seitenwand 74 zu und gelangt durch die Austrittsöffnung für Sauerstoffgas 112 in den Strömungskanal 58 des chemischen Sauerstoff-Jod-Lasers 18, wobei von der Gasströmung mitgerissene Flüssigkeitströpfchen von dem Tropfenseparator 114 zurückgehalten werden. Aus dem Strömungskanal 58 strömt der elektronisch angeregte Sauerstoff, gegebenenfalls mit einem zugesetzten inerten Gas, durch die Überschalldüse 60 in den Laserresonator des chemischen Sauerstoff-Jod-Lasers 18 aus, wobei eine Überschallströmung entsteht.

In den Strom elektronisch angeregten Sauerstoffs wird Joddampf aus dem Joddampferzeuger 64 über die Joddampfzuleitung 62 injiziert, worauf die Moleküle des Joddampfes durch Stöße mit elektronisch angeregten Sauerstoffmolekülen dissoziieren. Die entstehenden Jodatome übernehmen durch Stöße mit weiteren elektronisch angeregten Sauerstoffmolekülen deren Anregungsenergie nahezu verlustfrei und gehen ihrerseits in einen elektronisch angeregten Zustand über, aus dem dann innerhalb des Laserresonators der Übergang in einen energetisch tiefer liegenden Zustand unter stimulierter Emission von Photonen erfolgt. Zwischen den Spiegeln 65 entsteht so in bekannter Weise ein kohärentes Strahlungsfeld, aus dem ein Laserstrahl durch einen der Spiegel 65, der teilweise durchlässig ist, ausgesandt wird.

Durch die oben angegebene Reaktion zur Erzeugung von elektronisch angeregtem Sauerstoff reichern sich in der BHP Chloridionen sowie Wassermoleküle an. Ferner wird bei dieser Reaktion eine erhebliche Wärmeenergie freigesetzt, die die BHP aufheizt. Mit steigender Temperatur zersetzt sich jedoch das Wasserstoffperoxid. Für eine kontinuierliche Erzeugung von elektronisch angeregtem Sauerstoff muß die BHP daher fortlaufend gekühlt und regeneriert werden.

Dies geschieht dadurch, daß durch die Überlauföffnung 116 aus der Reaktionskammer 22 austretende BHP von der Druckerhöhungspumpe 26 durch die Flüssigkeitsabführleitung 24 und die Zwischenleitung 28 in den Wärmetauscher 30 gefördert wird, wo der BHP die Reaktionswärme durch Wärmeaustausch nach dem Gegenstromprinzip mit einem Kühlmittel, das seinerseits in einem konventionellen Kühlmittelkreislauf 32 gekühlt wird, entzogen wird.

Darauf gelangt die BHP durch die Zwischenleitung 34 in den Abscheider 36, wo ihr das in der oben angegebenen chemischen Reaktion entstandene Kaliumchlorid und Wasser entzogen werden.

Es ist günstig, den Abscheider 36 in Strömungsrichtung hinter dem Wärmetauscher 30 anzuordnen, da nach der Abkühlung der BHP im Wärmetauscher 30 das in ihr gelöste Salz leichter ausfällt.

Die von den Reaktionsprodukten befreite BHP gelangt über die Zwischenleitung 38 in den Mischbehälter 40, wo ihr Kalilauge aus dem Speicher für Kalilauge 44 über die Zuführleitung für Kalilauge 42 und Wasserstoffperoxid aus dem Speicher für Wasserstoffperoxid 48 über die Zuführleitung für Wasserstoffperoxid 46 zugeführt werden, um das in der oben angegebenen Reaktion verbrauchte Wasserstoffperoxid und die verbrauchte Kalilauge zu ersetzen.

Die auf diese Weise gekühlte und regenerierte BHP strömt durch die Flüssigkeitsrückführleitung 50 in die Reaktionskammer 22 zurück.

Der Substratkörper 102 kann zu Reinigungszwecken oder zum Austausch gegen einen anderen Substratkörper 102 nach Abnehmen des Deckels 76 aus dem Innenraum 92 der Reaktionskammer 22 entnommen werden, in dem die Welle 90 mit den sie lagernden Lagerbuchsen 86 durch die Ausnehmungen 78 und 82 nach oben aus der Reaktionskammer 22 heraus bewegt wird.

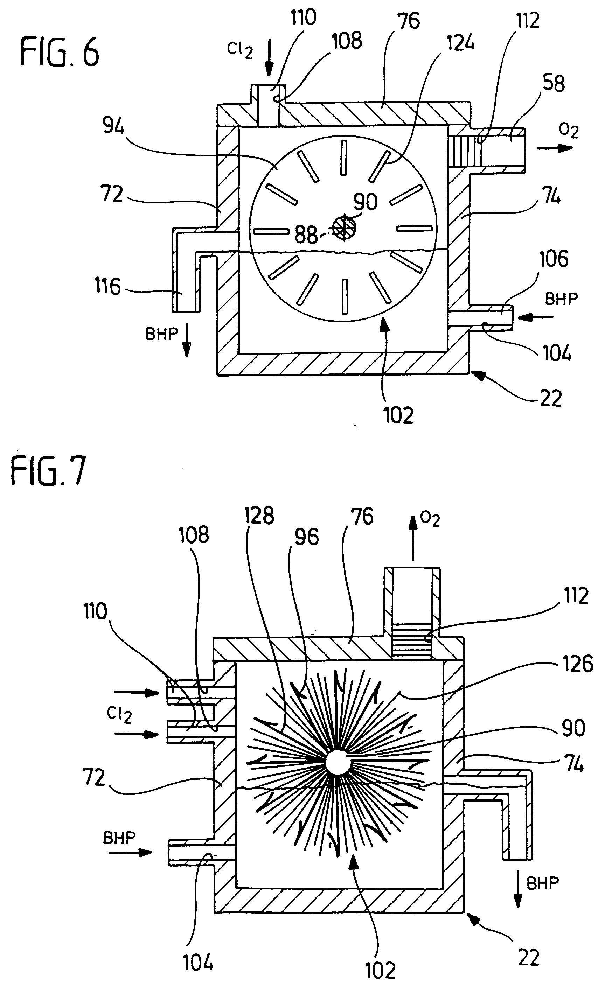

Eine in Fig. 5 in Verbindung mit Fig. 1 dargestellte zweite Ausführungsform des erfindungsgemäßen Generators 20 zur Erzeugung von elektronisch angeregtem Sauerstoff unterscheidet sich von der in den Fig. 1 bis 4 dargestellten ersten Ausführungsform dadurch, daß die Innenseiten der linken Seitenwand 72 und der rechten Seitenwand 74 nicht eben sind, sondern oberhalb des Flüssigkeitsspiegels 120 derart gegen den Substratkörper 102 vorspringen, daß sie Ausschnitte aus der Mantelfläche eines Kreiszylinders bilden, dessen Achse mit der Drehachse 88 übereinstimmt und dessen Durchmesser geringfügig größer ist als der Durchmesser der Scheiben 94.

Durch diese Ausgestaltung der Seitenwände 72 und 74 wird erreicht, daß der aus den Eintrittsbohrungen für Chlorgas 108 austretende Chlorgasstrom unmittelbar von den Leitschaufeln 96 erfaßt und über die Oberfläche der Scheiben 94 verteilt wird und daß der Strom durch chemische Reaktion entstandenen Sauerstoffgases durch die Leitschaufeln 96 ebenso unmittelbar in die Austrittsöffnung für Sauerstoffgas 112 gelenkt wird, ohne daß in Ecken des Innenraumes 92 der Reaktionskammer 22 Verwirbelungen entstehen könnten.

Außerdem wird der Weg des durch chemische Reaktion entstandenen elektronisch angeregten Sauerstoffgases in den Strömungskanal 58 verkürzt, so daß der Verlust an elektronisch angeregten Sauerstoffmolekülen durch Abregung bei Stößen untereinander verringert wird.

Ferner ist die oberhalb des Flüssigkeitsspiegels 120 liegende Wandfläche des Innenraums 92 gegenüber der ersten Ausführungsform des erfindungsgemäßen Generators 20 verringert, so daß auch der Verlust von elektronisch angeregten Sauerstoffmolekülen durch Stoß mit den Wänden 68, 70, 72, 74 oder 76 der Reaktionskammer 22 reduziert wird.

Im übrigen entspricht die in Fig. 5 in Verbindung mit Fig. 1 dargestellte zweite Ausführungsform des erfindungsgemäßen Generators 20 hinsichtlich Aufbau und Funktion der in den Fig. 1 bis 4 dargestellten ersten Ausführungsform des erfindungsgemäßen Generators.

Eine in Fig. 6 in Verbindung mit Fig. 1 dargestellte dritte Ausführungsform des erfindungsgemäßen Generators 20 zur Erzeugung von elektronisch angeregtem Sauerstoff unterscheidet sich von der in den Fig. 1 bis 4 dargestellten ersten Ausführungsform dadurch, daß die Eintrittsbohrungen für Chlorgas 108 nicht in der linken Seitenwand 72 angeordnet sind, sondern den Deckel 76 vertikal nahe der linken Seitenwand 72 durchsetzen.

Ferner sind die Eintrittsbohrungen für BHP 104 und die Überlauföffnung 116 im Vergleich zu der in Fig. 2 dargestellten ersten Ausführungsform des erfindungsgemäßen Generators 20 spiegelbildlich verkehrt angeordnet, so daß bei der dritten Ausführungsform die Eintrittsbohrungen für BHP 104 in der rechten Seitenwand 74 und die Überlauföffnung 116 in der linken Seitenwand 72 der Reaktionskammer 22 angeordnet sind.

Die Strömungsrichtung der BHP in dem Flüssigkeitsbad 118 und damit die Drehrichtung des Substratkörpers 102 kehren sich daher gegenüber den in Fig. 2 dargestellten Verhältnissen um.

Das Chlorgas tritt bei dieser dritten Ausführungsform des Generators 20 aus den Eintrittsbohrungen für Chlorgas 108 im wesentlichen senkrecht zur Einströmrichtung der BHP und senkrecht zur Ausströmrichtung des Sauerstoffgases in die Reaktionskammer 22 ein.

Bei dieser relativen Anordnung der Eintrittsbohrungen für Chlorgas 108, der Eintrittsbohrungen für BHP 104 sowie der Austrittsöffnung für Sauerstoffgas 112 kann die erwünschte Umlenkung der Gasströmung über die Oberfläche des Substratkörpers 102 auch mit ebenen Leitschaufeln 124 erzielt werden, wobei die ebenen Leitschaufeln 124 sich ebenso wie die gekrümmten Leitschaufeln 96 der ersten Ausführungsform in Richtung der Drehachse 88 von einer Stirnfläche einer der Scheiben 94 zu der dieser zugewandten Stirnfläche einer benachbarten Scheibe 94 und vom äußeren Umfang der Scheiben 94 auf die Drehachse 88 zu erstrecken.

Im übrigen entspricht die in Fig. 6 in Verbindung mit Fig. 1 dargestellte dritte Ausführungsform des erfindungagemäßen Generators 20 hinsichtlich Aufbau und Funktion der in den Fig. 1 bis 4 dargestellten ersten Ausführungsform.

Eine in Fig. 7 in Verbindung mit Fig. 1 dargestellte vierte Ausführungsform des erfindungsgemäßen Generators 20 zur Erzeugung von elektronisch angeregtem Sauerstoff unterscheidet sich von der in den Fig. 1 bis 4 dargestellten Ausführungsform dadurch, daß der Substratkörper 102 keine auf der Welle 90 angeordneten Scheiben 94, sondern im wesentlichen radial von der Welle 90 abstehende und drehfest mit dieser verbundene Borsten 126 beispielsweise Drähte oder Stäbe umfaßt.

Die Borsten 126 bieten gegenüber den Scheiben 94 den Vorteil, daß sie eine größere Oberfläche pro Volumen aufweisen und daher bei der Drehung des Substratkörpers 102 eine größere Oberfläche desselben mit einem BHP-Film überzogen wird, so daß für die oben angegebene Grenzflächenreaktion eine größere Grenzfläche zur Verfügung steht.

Da der Strömungswiderstand der Borsten 126 zu gering ist, um der Flüssigkeitsströmung den für die Aufrechterhaltung der Drehung des Substratkörpers 102 erforderlichen Impuls zu entnehmen, und da auch bei dieser Ausführungsform eine Umlenkung des Chlorgasstromes über möglichst die gesamte Oberfläche des Substratkörpers 102 wünschenswert ist, umfaßt der Substratkörper 102 ferner gekrümmte Leitschaufeln 96, die beispielsweise wie die im Zusammenhang mit der ersten Ausführungsform des erfindungsgemäßen Generators 20 beschriebenen Leitschaufeln 96 ausgebildet und angeordnet sein können.

Statt von den Scheiben 94 werden die Leitschaufeln 96 bei der in Fig. 7 dargestellten vierten Ausführungsform des erfindungsgemäßen Generators 20 von drehfest an der Welle 90 angeordneten, radial von dieser abstehenden Haltestangen 128 gehalten.

Grundsätzlich können bei dieser vierten Ausführungsform die Eintrittsbohrungen für Chlorgas 108 und die Austrittsöffnung für Sauerstoffgas 112 in derselben Weise wie bei der in Fig. 2 dargestellten ersten oder der in Fig. 6 dargestellten dritten Ausführungsform des erfindungsgemäßen Generators angeordnet werden.

Alternativ oder ergänzend dazu kann jedoch beispielsweise vorgesehen sein, daß mehrere die linke Seitenwand 72, die die Eintrittsbohrungen für BHP 104 aufweist, senkrecht zu ihrer Oberfläche durchsetzende Eintrittsbohrungen für Chlorgas 108 übereinander angeordnet und mittels Eintrittsrohren 110 und einer (nicht dargestellten) Rohrverzweigung an die Eduktgaszuführleitung 52 angeschlossen sind.

Ferner kann, wie in Fig. 7 dargestellt, vorgesehen sein, daß die Austrittsöffnung für Sauerstoffgas 112 nicht in der rechten Seitenwand 74, sondern nahe der rechten Seitenwand 74 im Deckel 76 angeordnet ist.

Im übrigen entspricht die vierte Ausführungsform des erfindungsgemäßen Generators 20 hinsichtlich Aufbau und Funktion der in den Fig. 1 bis 4 dargestellten ersten Ausführungsform.

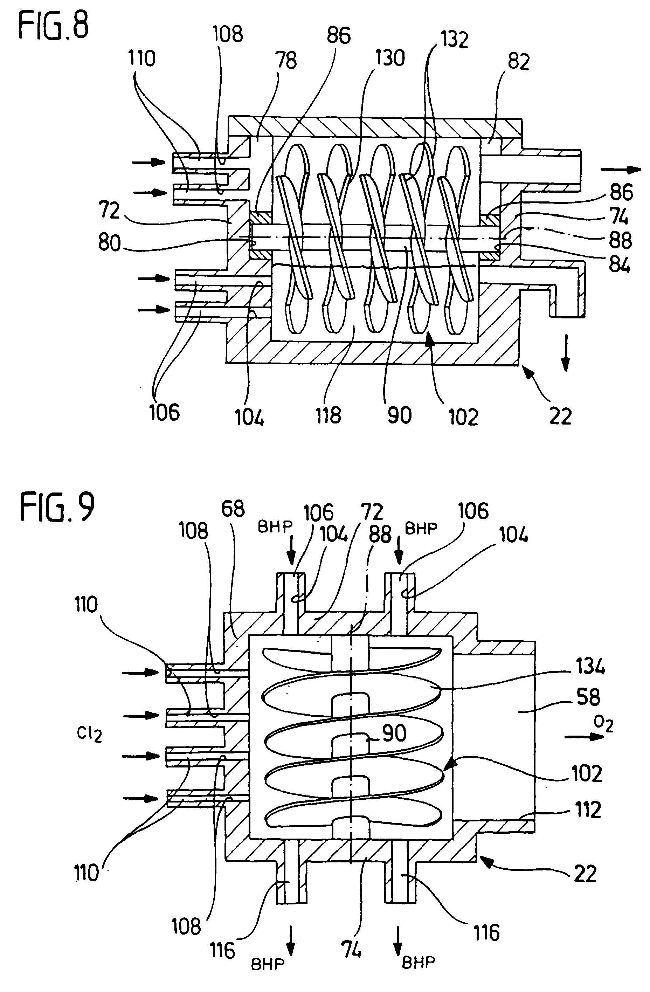

Ein in Fig. 8 in Verbindung mit Fig. 1 dargestellte fünfte Ausführungsform des erfindungsgemäßen Generators 20 zur Erzeugung von elektronisch angeregtem Sauerstoff unterscheidet sich von der in den Fig. 1 bis 4 dargestellten ersten Ausführungsform dadurch, daß die Drehachse 88 des Substratkörpers 102 nicht quer zu den Eintrittsbohrungen für BHP 104, sondern parallel zu diesen und damit zur Strömungsrichtung der BHP im Flüssigkeitsbad 118 ausgerichtet ist.

Bei dieser Ausführungsform weist daher die Innenseite der linken Seitenwand 72 eine Ausnehmung 78 mit rechteckigem Querschnitt auf, die sich von der Mitte des oberen Randes der linken Seitenwand 72 vertikal nach unten bis ungefähr zur Mitte der Innenseite der linken Seitenwand 72 erstreckt, wo sie in einen halbzylindrischen Endbereich 80 mündet. Spiegelbildlich zu der Ausnehmung 78 und dem Endbereich 80 weist die rechte Seitenwand 74 eine Ausnehmung 82 mit rechteckigem Querschnitt auf, die sich von der Mitte des oberen Randes der rechten Seitenwand 74 vertikal nach unten bis ungefähr zur Mitte der Innenseite der rechten Seitenwand 74 erstreckt und in einem halbzylindrischen Endbereich 84 mündet.

Die Endbereiche 80 und 84 tragen jeweils eine der zwei Lagerbuchsen 86, in denen je ein Ende der Welle 90 um die horizontale Drehachse 88 drehbar gelagert ist.

Die bei den in den Fig. 2 bis 7 dargestellten Ausführungsformen vorgesehenen Ausnehmungen 78, 82 und Endbereiche 80, 84 in der vorderen Seitenwand 68 bzw. der hinteren Seitenwand 70 können entfallen.

Die Welle 90 trägt mehrere, beispielsweise fünf Propeller 130, die längs der Welle 90 äquidistant und drehfest auf derselben angeordnet sind und deren Symmetrieachse mit der Drehachse 88 übereinstimmt.

Die Propeller 130 können, wie in Fig. 8 dargestellt, beispielsweise je vier Propellerflügel 132 aufweisen, die man sich in der Weise entstanden denken kann, daß jeweils eine zur Drehachse 88 senkrecht ausgerichtete Kreisscheibe durch radiale Schnitte in vier Sektoren zerlegt und die Sektoren verwunden wurden.

Die Propeller 130 sind längs der Welle 90 50 angeordnet, daß einander entsprechende Propellerflügel 132 verschiedener Propeller 130 bezüglich der Drehachse 88 dieselbe Winkelstellung einnehmen, also bei Blickrichtung parallel zur Drehachse 88 miteinander zur Deckung kommen.

Die Welle 90 und die Propeller 130 bilden zusammen einen Substratkörper 102.

In der linken Seitenwand 72 sind mehrere, die linke Seitenwand 72 senkrecht zu deren Oberfläche durchsetzende, neben- oder übereinander angeordnete Eintrittsbohrungen für BHP 104 vorgesehen, die über Eintrittsrohre 106 und eine (nicht dargestellte) Rohrverzweigung mit der Flüssigkeitsrückführleitung 50 verbunden sind.

Durch die Eintrittsbohrungen für BHP 104 strömt BHP in das Flüssigkeitsbad 118 im unteren Bereich des Innenraums 92 der Reaktionskammer 22 ein. Die innerhalb des Flüssigkeitsbades 118 befindlichen Propellerflügel 132 nehmen einen Teil des Impulses der Flüssigkeitsströmung auf und übertragen ihn auf den Substratkörper 102, so daß sich dieser um die Drehachse 88 dreht.

Dabei tauchen die Propellerflügel 132 jedes Propellers 130 abwechselnd in das Flüssigkeitsbad 118 ein und werden von der BHP benetzt, so daß beim Auftauchen aus dein Flüssigkeitsbad 118 ein dünner Flüssigkeitsfilm auf den Propellerflügeln 132 zurückbleibt.

Die linke Seitenwand 72 weist in ihrem oberhalb des Flüssigkeitsspiegels 120 liegenden Bereich mehrere die Oberfläche der linken Seitenwand 72 senkrecht durchsetzende Eintrittsbohrungen für Chlorgas 108 auf, die über Eintrittsrohre 110 und eine (nicht dargestellte) Rohrverzweigung an die Eduktgaszuführleitung 52 angeschlossen sind. Dabei sind die Eintrittsbohrungen für Chlorgas 108 in unterschiedlichen radialen Abständen von der Drehachse 88 so angeordnet, daß die Propellerflügel 132 des der linken Seitenwand 72 nächstgelegenen Propellers 130 gleichmäßig mit Chlorgas beblasen werden.

Die Chlorgasströmung wird mittels der Propellerflügel 132 zwischen diesen hindurchgeleitet, so daß das Chlorgas, in Verbindung mit der Drehung des Substratkörpers 102 um die Drehachse 88, sämtliche Propellerflügel 132 aller Propeller 130 überstreicht, wobei es zu der oben angegebenen Grenzflächenreaktion kommt, bei der elektronisch angeregter Sauerstoff entsteht.

Alternativ oder ergänzend zu der in Fig. 8 dargestellten Anordnung der Eintrittsbohrungen für Chlorgas 108 kann auch vorgesehen sein, daß das Chlorgas durch im wesentlichen senkrecht zur Drehachse 88 ausgerichtete Eintrittsbohrungen im Deckel 76, in der vorderen Seitenwand 68 oder in der hinteren Seitenwand 70 eingeblasen wird. Ein solches Einblasen des Chlorgases senkrecht zur Drehachse 88 kann insbesondere bei hoher Strömungsgeschwindigkeit des Chlorgases günstiger sein als ein Einblasen parallel zur Drehachse 88.

Auf einen in der Austrittsöffnung für Sauerstoffgas 112 angeordneten Tropfenseparator kann bei dieser Ausführungsform verzichtet werden. Der Tropfenseparator 114 ist auch bei den vorstehend beschriebenen Ausführungsformen nicht zwingend erforderlich.

Im übrigen entspricht die fünfte Ausführungsform des erfindungsgemäßen Generators 20 hinsichtlich Aufbau und Funktion der in den Figuren 1 bis 4 dargestellten ersten Ausführungsform.

Eine in Fig. 9 in Verbindung mit Fig. 1 dargestellte sechste Ausführungsform des erfindungsgemäßen Generators 20 zur Erzeugung von elektronisch angeregtem Sauerstoff unterscheidet sich von der in Fig. 8 in Verbindung mit Fig. 1 dargestellten fünften Ausführungsform dadurch, daß der Substratkörper 102 statt der Propeller 130 eine drehfest mit der Welle 90 verbundene Schnecke 134 umfaßt, deren Achse mit der Drehachse 88 übereinstimmt und die mehrere, beispielsweise vier, Windungen aufweist.

Wie der mit Propellern 130 versehene Substratkörper 102 der in Fig. 8 dargestellten fünften Ausführungsform wird auch der Substratkörper 102 der in Fig. 9 dargestellten sechsten Ausführungsform des erfindungsgemäßen Generators 20 durch eine im wesentlichen zu der Drehachse 88 parallele BHP-Strömung in Drehung versetzt, wobei die jeweils im Flüssigkeitsbad 118 befindlichen Teile der Schnecke 134 als Impulsaufnehmer wirken.

Die vordere Seitenwand 68 ist oberhalb des Flüssigkeitsspiegeis 120 mit die Oberfläche der vorderen Seitenwand 68 senkrecht durchsetzenden Eintrittsbohrungen für Chlorgas 108 versehen, die über Eintrittsrohre 110 und eine (nicht dargestellte) Rohrverzweigung an die Eduktgaszuführleitung 52 angeschlossen sind. Das in den Innenraum 92 der Reaktionskammer 22 einströmende Chlorgas wird durch die Windungen der Schnecke 134, im Verlauf einer vollständigen Drehung des Substratkörpers 102 um die Drehachse 88 über die gesamte Oberfläche der Schnecke 134 geführt. In dem durch das Eintauchen der Schnecke 134 in das Flüssigkeitsbad 118 auf derselben gebildeten Flüssigkeitsfilm läuft die oben angegebene Reaktion ab, bei der elektronisch angeregter Sauerstoff entsteht.

Bei der in Fig. 9 dargestellten sechsten Ausführungsform des erfindungsgemäßen Generators ist die Austrittsöffnung für Sauerstoffgas 112 in der hinteren Seitenwand 70 oberhalb des Flüssigkeitsspiegels 120 angeordnet und erstreckt sich über nahezu die gesamte Breite der hinteren Seitenwand 70.

Alternativ oder ergänzend zu den senkrecht zur Oberfläche der vorderen Seitenwand 68 und der Drehachse 88 ausgerichteten Eintrittsbohrungen für Chlorgas 108 können auch Eintrittsbohrungen für Chlorgas vorgesehen sein, die unter einem der Steigung der Schnecke 134 entsprechenden Winkel gegen Ebenen senkrecht zur Drehachse 88 geneigt sind.

Besonders günstig ist es, wenn eine der Anzahl der Windungen der Schnecke 134 entsprechende Anzahl von Eintrittsbohrungen für Chlorgas 108 in einem der Ganghöhe der Schnecke 134 entsprechenden Abstand nebeneinander angeordnet sind.

Die rechte Seitenwand 74 wird senkrecht zu ihrer Oberfläche von mehreren Überlauföffnungen 116 durchsetzt, die über eine (nicht dargestellte) Rohrvereinigung an die Flüssigkeitsabführleitung 24 angeschlossen sind.

Im übrigen entspricht die in Fig. 9 in Verbindung mit Fig. 1 dargestellte sechste Ausführungsform des erfindungsgemäßen Generators 20 hinsichtlich Aufbau und Funktion der in Fig. 8 in Verbindung mit Fig. 1 dargestellten fünften Ausführungsform.

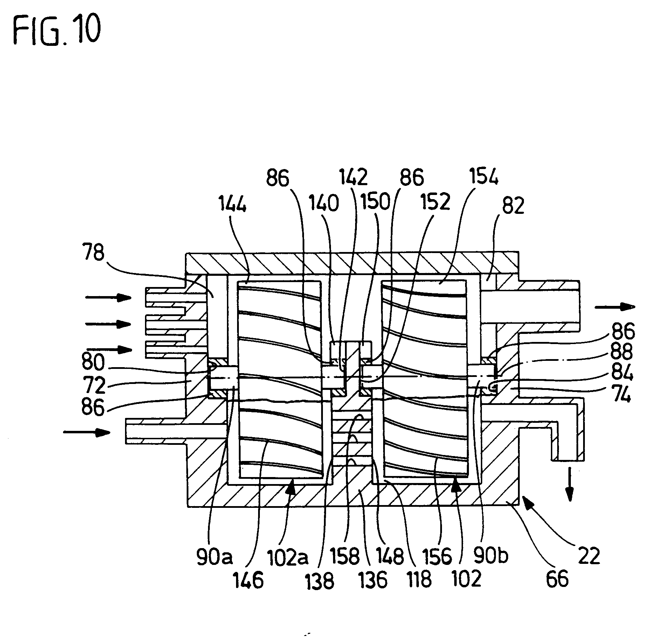

Die in Fig. 10 in Verbindung mit Fig. 1 dargestellte siebte Ausführungsform des erfindungsgemäßen Generators 20 zur Erzeugung von elektronisch angeregtem Sauerstoff unterscheidet sich von der in Fig. 8 in Verbindung mit Fig. 1 dargestellten fünften Ausführungsform dadurch, daß zwei sich gegensinnig drehende Substratkörper 102a und 102b vorgesehen sind.

Bei der siebten Ausführungsform trägt der Boden 66 der Reaktionskammer 22 in der Mitte seiner Oberseite einen quaderförmigen Stützpfeiler 136, dessen Oberflächen parallel zu den Seitenwänden 68, 70, 72, 74 bzw. zum Deckel 76 der Reaktionskammer 22 ausgerichtet sind.

Eine der linken Seitenwand 72 zugewandte linke Seitenfläche 138 des Stützpfeilers 136 weist eine Ausnehmung 140 mit rechteckigem Querschnitt auf, die sich von der Mitte des oberen Randes der linken Seitenfläche 138 vertikal nach unten erstreckt und in einen halbzylindrischen Endbereich 142 mündet, welcher dem halbzylindrischen Endbereich 80 in der linken Seitenwand 72 gegenüber in derselben Höhe über dem Boden 66 wie dieser angeordnet ist.

Der halbzylindrische Endbereich 80 und der halbzylindrische Endbereich 142 tragen Lagerbuchsen 86, in denen jeweils ein Ende einer um die Drehachse 88 drehbaren Welle 90a gelagert ist.

Mit der Welle 90a ist drehfest eine zu dieser koaxiale zylindrische Walze 144 verbunden.

Die Walze 144 trägt längs ihres Umfangs radial von derselben abstehende Leitschaufeln 146, die sich in axialer Richtung über die gesamte Länge der Walze 144 erstrecken und am der linken Seitenwand 72 der Reaktionskammer 22 zugewandten Ende der Walze 144 parallel zur Drehachse 88 ausgerichtet, zum der linken Seitenwand 72 abgewandten Ende der Walze 144 hin jedoch zunehmend gegen die Drehachse 88 verdreht sind.

Der Winkel, um den die Leitschaufeln 146 gegen die Drehachse 88 verdreht sind, bestimmt die Umdrehungsgeschwindigkeit der Walze 144 in Abhängigkeit von der Strömungsgeschwindigkeit der BHP im Flüssigkeitsbad 118.

Eine der rechten Seitenwand 74 der Reaktionskammer 22 zugewandte rechte Seitenfläche 148 des Stützpfeilers 136 weist spiegelbildlich zu der Ausnehmung 140 und dem halbzylindrischen Endbereich 142 der linken Seitenfläche 138 ebenfalls eine Ausnehmung 150 auf, die in einen halbzylindrischen Endbereich 152 mündet.

Der halbzylindrische Endbereich 84 in der rechten Seitenwand 74 und der halbzylindrische Endbereich 152 in der rechten Seitenfläche 148 des Stützpfeilers 136 tragen Lagerbuchsen 86, in denen jeweils ein Ende einer um die Drehachse 88 drehbaren Welle 90b gelagert ist.

Mit der Welle 90b ist eine zu dieser koaxiale zylindrische Walze 154 verbunden.

Die Walze 154 trägt längs ihres Umfangs von derselben radial abstehende Leitschaufeln 156, die sich in axialer Richtung über die gesamte Länge der Walze 154 erstrecken. Die Leitschaufeln 156 weisen denselben Abstand voneinander auf wie die Leitschaufeln 146 der Walze 144 und sind in gleichem Maße gekrümmt, jedoch in gegenläufigem Sinne, so daß die Leitschaufeln 156 an dem der rechten Seitenwand 74 der Reaktionskammer 22 abgewandten Ende der Walze 154 um einen maximalen Winkel gegen die Drehachse 88 verdreht und an dem der rechten Seitenwand 74 zugewandten Ende der Walze 154 parallel zu der Drehachse 88 ausgerichtet sind.

Die Welle 90a, die Walze 144 und die Leitschaufeln 146 bilden zusammen einen Substratkörper 102a. Die Welle 90b, die Walze 154 und die Leitschaufeln 156 bilden zusammen einen Substratkörper 102b.

Ferner wird der Stützpfeiler 136 von parallel zu der Drehachse 88 ausgerichteten Durchtrittskanälen 158 für den Durchtritt von BHP von der linken Seitenfläche 138 zu der rechten Seitenfläche 148 des Stützpfeilers 136 durchsetzt.

Bei der in Fig. 10 dargestellten siebten Ausführungsform des erfindungsgemäßen Generators 20 ist die linke Seitenwand 72 mit einer dieselbe senkrecht zu ihrer Oberfläche durchsetzenden Eintrittsbohrung für BHP 104 versehen, die in ungefähr demselben radialen Abstand von der Drehachse 88 angeordnet ist wie die Leitschaufeln 146 der Walze 144.

Die Leitschaufeln 146 lenken die einströmende BHP aufgrund ihrer Krümmung in Richtung des Umfangs der Walze 144 ab. Der von der BHP-Strömung auf die Leitschaufeln 146 übertragene Rückstoßimpuls versetzt dabei den Substratkörper 102a in Drehung um die Drehachse 88.

Die durch die Durchtrittskanäle 158 des Stützpfeilers 136 oder um denselben herum zur Walze 154 gelangende BHP wird von den Leitschaufeln 156 der Walze 154 aufgrund deren Krümmung in umgekehrter Richtung wie durch die Leitschaufeln 146 der Walze 144 umgelenkt. Daher versetzt der von den Leitschaufeln 156 der Walze 154 aufgenommene Rückstoßimpuls den Substratkörper 102b in eine zu der Drehung des Substratkörpers 102a gegensinnige Drehung um die Drehachse 88.

Die linke Seitenwand 72 der Reaktionskammer 22 wird von mehreren Eintrittabohrungen für Chlorgas 108 senkrecht zu ihrer Oberfläche durchsetzt, die oberhalb des Flüssigkeitsspiegels 120 angeordnet sind und ungefähr denselben radialen Abstand von der Drehachse 88 aufweisen wie die Leitschaufeln 146.

Die Eintrittsbohrungen für Chlorgas 108 sind über Eintrittsrohre 110 und eine (nicht dargestellte) Rohrverzweigung an die Eduktgaszuführleitung 52 angeschlossen.

Das durch die Eintrittsbohrungen von Chlorgas 108 parallel zur Drehachse 88 in die Reaktionskammer 22 einströmende Chlorgas wird von den Leitschaufeln 146 über die Mantelfläche der Walze 144 gelenkt und erhält dabei aufgrund der Krümmung der Leitschaufeln 146 eine Geschwindigkeitskomponente in Richtung des Umfanges der Walze 144.

Gelangt das Chlorgas und das an der Oberfläche des Substratkörpers 102a gebildete Sauerstoffgas zur Walze 154, so erfährt es aufgrund der gegensinnigen Krümmung der Leitschaufeln 156 der Walze 154 eine weitere Geschwindigkeitsänderung in Richtung des Umfanges der Walze 154, die der ersten Geschwindigkeitsänderung durch die Leitschaufeln 146 entgegengesetzt und etwa gleich groß ist.

Die durch die Austrittsöffnung für Sauerstoffgas 112 in den Strömungskanal 58 austretende Gasströmung, die vorwiegend aus elektronisch angeregtem Sauerstoffgas besteht, weist daher im wesentlichen keine Geschwindigkeitskomponente mehr auf, die quer zur Drehachse 88 und damit quer zum Strömungskanal 58 ausgerichtet ist. Dies ist der Ausbildung einer erwünscht gleichmäßigen Gasströmung im Strömungskanal 58 förderlich.

Statt einer Anordnung mit zwei gegensinnig sich drehenden Substratkörpern 102a, 102b sind auch Anordnungen mit einer größeren Anzahl von Substratkörpern möglich, von denen jeweils zwei Substratkörper sich gegensinnig drehen.

Im übrigen entspricht die in Fig. 10 in Verbindung mit Fig. 1 dargestellte siebte Ausführungsform des erfindungsgemäßen Generators 20 hinsichtlich Aufbau und Funktion der in Fig. 8 in Verbindung mit Fig. 1 dargestellten fünften Ausführungsform.

Die für die vorstehend beschriebenen Ausführungsformen des erfindungsgemäßen Generators angegebenen Anordnungen der Eintrittsbohrungen für Chlorgas 108 und der Austrittsöffnung für Sauerstoffgas 112 stellen bevorzugte Anordnungen dar. Alternativ oder ergänzend dazu können jeweils auch im Zusammenhang mit anderen Ausführungsformen beschriebene Anordnungen der Eintrittsbohrungen für Chlorgas 108 bzw. der Austrittsöffnung für Sauerstoffgas 112 vorgesehen sein.

## Patentansprüche

1. Generator zur Erzeugung eines Produktgases durch chemische Reaktion zwischen einem Eduktgas und einer Flüssigkeit, umfassend eine geschlossene Reaktionskammer mit einer Flüssigkeitszufuhr, einer Flüssigkeitsabfuhr, einer Eduktgaszufuhr, einer Produktgasabfuhr, einem innerhalb der Reaktionskammer angeordneten Flüssigkeitsbad und einem in der Reaktionskammer drehbar angeordneten Substratkörper, dessen Drehachse so angeordnet ist, daß zumindest ein Teil der Oberfläche des Substratkörpers während einer Drehung desselben abwechselnd in das Flüssigkeitsbad eintaucht und von der Flüssigkeit benetzt aus dem Flüssigkeitsbad auftaucht,
**dadurch gekennzeichnet,**
daß der Generator (20) einen Strömungserzeuger (26) zur Erzeugung einer kontinuierlichen Strömung der Flüssigkeit in der Reaktionskammer (22) umfaßt und daß der Substratkörper (102) mindestens einen Impulsaufnehmer (96; 124; 130; 134; 146, 156) zur Aufnahme eines Teils des Impulses der Strömung der Flüssigkeit und zur Erzeugung einer Drehbewegung des Substratkörpers (102) um seine Drehachse (88) umfaßt.

2. Generator nach Anspruch 1, dadurch gekennzeichnet, daß der Generator (20) eine Einrichtung zur Erzeugung einer kontinuierlichen Strömung des Eduktgases in der Reaktionskammer (22) umfaßt.

3. Generator nach Anspruch 2, dadurch gekennzeichnet, daß der Substratkörper (102) mindestens ein Umlenkelement (96; 124; 130; 134; 146, 156) zum Umlenken der Strömung des Eduktgases auf die Oberfläche des Substratkörpers (102) umfaßt.

4. Generator nach Anspruch 2, dadurch gekennzeichnet, daß das oder die Umlenkelemente (96; 124; 130; 134; 146, 156) so ausgestaltet sind, daß sie die Strömung des Eduktgases im wesentlichen über die gesamte Oberfläche des Substratkörpers (102) lenken.

5. Generator nach Anspruch 3 oder 4, dadurch gekennzeichnet, daß die Impulsaufnehmer (96; 124; 130; 134; 146, 156) zur Umlenkung der Strömung des Eduktgases auf die Oberfläche des Substratkörpers (102) ausgestaltet sind.

6. Generator nach einem der voranstehenden Ansprüche, dadurch gekennzeichnet, daß der Substratkörper (102) mindestens ein Umlenkelement (96; 124; 130; 134; 146, 156) zum Umlenken einer Strömung des Produktgases zur Produktgasabfuhr hin umfaßt.

7. Generator nach Anspruch 6, dadurch gekennzeichnet, daß der oder die Impulsaufnehmer (96; 124; 130; 134; 146, 156) zum Umlenken einer Strömung des Produktgases zur Produktgasabfuhr (112) hin ausgestaltet sind.

8. Generator nach einem der voranstehenden Ansprüche, dadurch gekennzeichnet, daß die Form des Innenraums der Reaktionskammer (22) oberhalb des innerhalb der Reaktionskammer (22) angeordneten Flüssigkeitsbades (118) sich der Form des Substratkörpers (102) anschmiegt.

9. Generator nach einem der voranstehenden Ansprüche, dadurch gekennzeichnet, daß der Substratkörper (102) eine im wesentlichen zylindrische Walze (144; 154) umfaßt.

10. Generator nach einem der voranstehenden Ansprüche, dadurch gekennzeichnet, daß der Substratkörper (102) quer zu seiner Drehachse (88) ausgerichtete Scheiben (94) umfaßt.

11. Generator nach einem der voranstehenden Ansprüche, dadurch gekennzeichnet, daß der Substratkörper (102) eine Vielzahl von Borsten (126) umfaßt.

12. Generator nach einem der voranstehenden Ansprüche, dadurch gekennzeichnet, daß der Impulsaufnehmer mindestens eine Leitschaufel (96; 124; 146; 156) umfaßt.

13. Generator nach Anspruch 12, dadurch gekennzeichnet, daß die Leitschaufeln (96; 146; 156) gekrümmt sind.

14. Generator nach einem der voranstehenden Ansprüche, dadurch gekennzeichnet, daß der Impulsaufnehmer mindestens einen Propeller (130) umfaßt.

15. Generator nach Anspruch 14, dadurch gekennzeichnet, daß die Symmetrieachse des Propellers (130) im wesentlichen parallel zur Richtung der Strömung der Flüssigkeit in der Reaktionskammer (22) ausgerichtet ist.

16. Generator nach einem der voranstehenden Ansprüche, dadurch gekennzeichnet, daß der Impulsaufnehmer eine Schnecke (134) umfaßt.

17. Generator nach Anspruch 16, dadurch gekennzeichnet, daß die Achse der Schnecke im wesentlichen parallel zur Drehachse (88) des Substratkörpers (102) und parallel zu der Richtung der Strömung der Flüssigkeit in der Reaktionskammer (22) ausgerichtet.

18. Generator nach einem der voranstehenden Ansprüche, dadurch gekennzeichnet, daß der Generator (20) eine Einrichtung zur Erzeugung einer im wesentlichen parallel zur Drehachse (88) des Substratkörpers (102) in die Reaktionskammer (22) eintretenden Strömung des Eduktgases umfaßt.

19. Generator nach einem der voranstehenden Ansprüche, dadurch gekennzeichnet, daß der Generator eine Einrichtung zur Erzeugung einer im wesentlichen quer zur Drehachse (88) des Substratkörpers (102) in die Reaktionskammer (22) eintretenden Strömung des Eduktgases umfaßt.

20. Generator nach einem der voranstehenden Ansprüche, dadurch gekennzeichnet, daß der Generator (20) mehrere in der Reaktionskammer (22) drehbar angeordnete Substratkörper (102) umfaßt.

21. Generator nach Anspruch 20, dadurch gekennzeichnet, daß der Generator (20) mindestens zwei Substratkörper (102a, 102b) mit zueinander parallelen Drehachsen (88) umfaßt.

22. Generator nach Anspruch 21, dadurch gekennzeichnet, daß zwei Substratkörper (102a, 102b) mit zueinander parallelen Drehachsen (88) Impulsaufnehmer (146, 156) zur Erzeugung einer gleichsinnigen Drehung der Substratkörper (102a, 102b) umfassen.

23. Generator nach Anspruch 20 oder 21, dadurch gekennzeichnet, daß zwei Substratkörper (102a, 102b) mit zueinander parallelen Drehachsen (88) Impulsaufnehmer (146, 156) zur Erzeugung einer gegensinnigen Drehung der Substratkörper (102a, 102b) umfassen.

24. Generator nach Anspruch 23, dadurch gekennzeichnet, daß der Generator (20) eine Einrichtung zur Erzeugung einer kontinuierlichen Gasströmung in der Reaktionskammer (22) umfaßt und daß die gegensinnig drehenden Substratkörper (102a, 102b) jeweils mindestens ein Umlenkelement (146, 156) zum Umlenken der Gasströmung umfassen, die so ausgestaltet sind, daß das oder die Umlenkelemente (146) des einen Substratkörpers (102a) der Gasströmung einen Umlenkimpuls erteilen, der einem der Gasströmung von dem oder den Umlenkelementen (156) des anderen Substratkörpers (102b) erteilten Umlenkimpuls entgegengerichtet ist.

25. Verwendung des Generators nach einem der voranstehenden Ansprüche zur Erzeugung von elektronisch angeregtem Sauerstoffgas durch chemische Reaktion zwischen Chlorgas und in einer Lauge gelöstem Wasserstoffperoxid.

26. Verfahren zur Erzeugung eines Produktgases durch chemische Reaktion zwischen einem Eduktgas und einer Flüssigkeit, bei dem einer geschlossenen Reaktionskammer das Eduktgas und die Flüssigkeit zugeführt und das Produktgas und die Flüssigkeit entnommen werden und ein Substratkörper in der Reaktionskammer so um eine Drehachse gedreht wird, daß zumindest ein Teil der Oberfläche des Substratkörpers während einer Drehung desselben abwechselnd in ein innerhalb der Reaktionskammer angeordnetes Flüssigkeitsbad eintaucht und von der Flüssigkeit benetzt aus dem Flüssigkeitsbad auftaucht, dadurch gekennzeichnet, daß eine kontinuierliche Strömung der Flüssigkeit in der Reaktionskammer erzeugt wird und daß mittels mindestens eines am Substratkörper angeordneten Impulsaufnehmers ein Teil des Impulses der Strömung der Flüssigkeit entnommen wird, um die Drehbewegung des Substratkörpers anzutreiben.

27. Verfahren nach Anspruch 26, dadurch gekennzeichnet, daß eine kontinuierliche Strömung des Eduktgases in der Reaktionskammer erzeugt wird.

28. Verfahren nach Anspruch 27, dadurch gekennzeichnet, daß mittels mindestens eines am Substratkörper angeordneten Umlenkelementes die Strömung des Eduktgases auf die Oberfläche des Substratkörpers umgelenkt wird.

29. Verfahren nach Anspruch 28, dadurch gekennzeichnet, daß das oder die Umlenkelemente die Strömung des Eduktgases im wesentlichen über die gesamte Oberfläche des Substratkörpers lenken.

30. Verfahren nach Anspruch 28 oder 29, dadurch gekennzeichnet, daß die Strömung des Eduktgases mittels des oder Impulsaufnehmer auf die Oberfläche des Substratkörpers umgelenkt wird.

31. Verfahren nach einem der Ansprüche 26 bis 30, dadurch gekennzeichnet, daß mittels mindestens eines am Substratkörper angeordneten Umlenkelementes eine Strömung des Produktgases aus der Reaktionskammer herausgelenkt wird.

32. Verfahren nach Anspruch 31, dadurch gekennzeichnet, daß die Strömung des Produktgases mittels des oder der Impulsaufnehmer aus der Reaktionskammer herausgelenkt wird.

33. Verfahren nach einem der Ansprüche 26 bis 32, dadurch gekennzeichnet, daß das Eduktgas im wesentlichen parallel zur Drehachse des Substratkörpers in die Reaktionskammer eingeblasen wird.

34. Verfahren nach einem der Ansprüche 26 bis 33, dadurch gekennzeichnet, daß das Eduktgas im wesentlichen quer zur Drehachse des Substratkörpers in die Reaktionskammer eingeblasen wird.

35. Verfahren nach einem der Ansprüche 26 bis 34, dadurch gekennzeichnet, daß mehrere in der Reaktionskammer angeordnete Substratkörper mittels der Strömung der Flüssigkeit in Drehung versetzt werden.

36. Verfahren nach Anspruch 35, dadurch gekennzeichnet, daß mindestens zwei Substratkörper mit zueinander parallelen Drehachsen in Drehung versetzt werden.

37. Verfahren nach Anspruch 36, dadurch gekennzeichnet, daß zwei Substratkörper mit zueinander parallelen Drehachsen in gleichsinnige Drehung versetzt werden.

38. Verfahren nach Anspruch 36 oder 37, dadurch gekennzeichnet, daß zwei Substratkörper mit zueinander parallelen Drehachsen in gegensinnige Drehung versetzt werden.

39. Verfahren nach Anspruch 38, dadurch gekennzeichnet, daß in der Reaktionskammer eine Gasströmung erzeugt wird und daß der Gasströmung mittels mindestens eines an dem einen Substratkörper angeordneten Umlenkelements ein Umlenkimpuls erteilt wird, der einem der Gasströmung mittels mindestens eines an dem anderen Substratkörper angeordneten Umlenkelementes erteilten Umlenkimpuls entgegengerichtet ist.

40. Verfahren nach einem der Ansprüche 26 bis 39, dadurch gekennzeichnet, daß als Produktgas elektronisch angeregtes Sauerstoffgas durch chemische Reaktion zwischen Chlorgas und in einer Lauge gelöstem Wasserstoffperoxid erzeugt wird.

41. Chemischer Sauerstoff-Jod-Laser, der mit von elektronisch angeregtem Sauerstoffgas auf Jodatome übertragener Anregungsenergie betrieben wird, dadurch gekennzeichnet, daß der chemische Sauerstoff-Jod-Laser (18) einen Generator (20) nach einem der Ansprüche 1 bis 24 zur Erzeugung des elektronisch angeregten Sauerstoffgases umfaßt.

## Claims

1. Generator for generating a product gas by means of a chemical reaction between an educt gas and a liquid, comprising a closed reaction chamber with a liquid supply, a liquid discharge, an educt gas supply, a product gas discharge, a liquid bath arranged within the reaction chamber and a substrate member arranged for rotation in the reaction chamber, the axis of rotation of said substrate member being arranged such that during a rotation of the substrate member at least part of the surface of the substrate member alternatingly dips into the liquid bath and emerges from the liquid bath wetted by the liquid, characterized in that the generator (20) comprises a flow generator (26) for generating a continuous flow of the liquid in the reaction chamber (22), and that the substrate member (102) comprises at least one momentum receiver (96; 124; 130; 134; 146, 156) for receiving part of the momentum of the flow of the liquid and for generating a rotary motion of the substrate member (102) about its axis of rotation (88).

2. Generator as defined in claim 1, characterized in that the generator (20) comprises a device for generating a continuous flow of the educt gas in the reaction chamber (22).

3. Generator as defined in claim 2, characterized in that the substrate member (102) comprises at least one deflecting element (96; 124; 130; 134; 146, 156) for deflecting the flow of the educt gas onto the surface of the substrate member (102).

4. Generator as defined in claim 2, characterized in that the deflecting element or elements (96; 124; 130; 134; 146, 156) are designed such that they direct the flow of the educt gas essentially over the entire surface of the substrate member (102).

5. Generator as defined in claim 3 or 4, characterized in that the momentum receivers (96; 124; 130; 134; 146, 156) are designed to deflect the flow of the educt gas onto the surface of the substrate member (102).

6. Generator as defined in any one of the preceding claims, characterized in that the substrate member (102) comprises at least one deflecting element (96; 124; 130; 134; 146, 156) for deflecting a flow of the product gas towards the product gas discharge.

7. Generator as defined in claim 6, characterized in that the momentum receiver or receivers (96; 124; 130; 134; 146, 156) are designed to deflect a flow of the product gas towards the product gas discharge (112).

8. Generator as defined in any one of the preceding claims, characterized in that the shape of the interior of the reaction chamber (22) above the liquid bath (118) arranged within the reaction chamber (22) conforms to the shape of the substrate member (102).

9. Generator as defined in any one of the preceding claims, characterized in that the substrate member (102) comprises an essentially cylindrical roller (144; 154).

10. Generator as defined in any one of the preceding claims, characterized in that the substrate member (102) comprises disks (94) aligned transversely to its axis of rotation (88).

11. Generator as defined in any one of the preceding claims, characterized in that the substrate member (102) comprises a plurality of bristles (126).

12. Generator as defined in any one of the preceding claims, characterized in that the momentum receiver comprises at least one guide vane (96; 124; 146; 156).

13. Generator as defined in claim 12, characterized in that the guide vanes (96; 146; 156) are curved.

14. Generator as defined in any one of the preceding claims, characterized in that the momentum receiver comprises at least one propeller (130).

15. Generator as defined in claim 14, characterized in that the axis of symmetry of the propeller (130) is aligned essentially parallel to the direction of the flow of the liquid in the reaction chamber (22).

16. Generator as defined in any one of the preceding claims, characterized in that the momentum receiver comprises a screw (134).

17. Generator as defined in claim 16, characterized in that the axis of the screw is aligned essentially parallel to the axis of rotation (88) of the substrate member (102) and parallel to the direction of the flow of the liquid in the reaction chamber (22).

18. Generator as defined in any one of the preceding claims, characterized in that the generator (20) comprises a device for generating a flow of the educt gas entering the reaction chamber (22) essentially parallel to the axis of rotation (88) of the substrate member (102).

19. Generator as defined in any one of the preceding claims, characterized in that the generator comprises a device for generating a flow of the educt gas entering the reaction chamber (22) essentially transversely to the axis of rotation (88) of the substrate member (102).

20. Generator as defined in any one of the preceding claims, characterized in that the generator (20) comprises a plurality of substrate members (102) arranged for rotation in the reaction chamber (22).

21. Generator as defined in claim 20, characterized in that the generator (20) comprises at least two substrate members (102a, 102b) with axes of rotation (88) parallel to one another.

22. Generator as defined in claim 21, characterized in that two substrate members (102a, 102b) with axes of rotation (88) parallel to one another comprise momentum receivers (146, 156) for generating a rotation of the substrate members (102a, 102b) in the same direction.

23. Generator as defined in claim 20 or 21, characterized in that two substrate members (102a, 102b) with axes of rotation (88) parallel to one another comprise momentum receivers (146, 156) for generating a rotation of the substrate members (102a, 102b) in opposite directions.

24. Generator as defined in claim 23, characterized in that the generator (20) comprises a device for generating a continuous gas flow in the reaction chamber (22), and that the substrate members (102a, 102b) rotating in opposite directions each comprise at least one deflecting element (146, 156) for deflecting the gas flow, said deflecting elements being designed such that the deflecting element or elements (146) of the one substrate member (102a) impart to the gas flow a deflection momentum directed contrary to a deflection momentum imparted to the gas flow by the deflecting element or elements (156) of the other substrate member (102b).

25. Use of the generator as defined in any one of the preceding claims for generating an electronically excited oxygen gas by means of a chemical reaction between chlorine gas and hydrogen peroxide dissolved in a lye.

26. Process for generating a product gas by means of a chemical reaction between an educt gas and a liquid, wherein the educt gas and the liquid are supplied to and the product gas and the liquid removed from a closed reaction chamber, and a substrate member is rotated about an axis of rotation in the reaction chamber such that during a rotation of the substrate member at least part of the surface of the substrate member alternatingly dips into a liquid bath arranged within the reaction chamber and emerges from the liquid bath wetted by the liquid, characterized in that a continuous flow of the liquid in the reaction chamber is generated, and that by means of at least one momentum receiver arranged on the substrate member part of the momentum of the flow of the liquid is taken therefrom in order to activate the rotary motion of the substrate member.

27. Process as defined in claim 26, characterized in that a continuous flow of the educt gas in the reaction chamber is generated.

28. Process as defined in claim 27, characterized in that the flow of the educt gas is deflected onto the surface of the substrate member by means of at least one deflecting element arranged on the substrate member.

29. Process as defined in claim 28, characterized in that the deflecting element or elements direct the flow of the educt gas essentially over the entire surface of the substrate member.

30. Process as defined in claim 28 or 29, characterized in that the flow of the educt gas is deflected onto the surface of the substrate member by means of the momentum receiver or receivers.

31. Process as defined in any one of claims 26 to 30, characterized in that a flow of the product gas is deflected out of the reaction chamber by means of at least one deflecting element arranged on the substrate member.

32. Process as defined in claim 31, characterized in that the flow of the product gas is deflected out of the reaction chamber by means of the momentum receiver or receivers.

33. Process as defined in any one of claims 26 to 32, characterized in that the educt gas is blown into the reaction chamber essentially parallel to the axis of rotation of the substrate member.

34. Process as defined in any one of claims 26 to 33, characterized in that the educt gas is blown into the reaction chamber essentially transversely to the axis of rotation of the substrate member.

35. Process as defined in any one of claims 26 to 34, characterized in that several substrate members arranged in the reaction chamber are caused to rotate by means of the flow of the liquid.

36. Process as defined in claim 35, characterized in that at least two substrate members with axes of rotation parallel to one another are caused to rotate.

37. Process as defined in claim 36, characterized in that two substrate members with axes of rotation parallel to one another are caused to rotate in the same direction.

38. Process as defined in claim 36 or 37, characterized in that two substrate members with axes of rotation parallel to one another are caused to rotate in opposite directions.

39. Process as defined in claim 38, characterized in that a gas flow is generated in the reaction chamber, and that a deflection momentum is imparted to the gas flow by means of at least one deflecting element arranged on the one substrate member, said deflection momentum being directed contrary to a deflection momentum imparted to the gas flow by means of at least one deflecting element arranged on the other substrate member.

40. Process as defined in any one of claims 26 to 39, characterized in that an electronically excited oxygen gas is generated as product gas by means of a chemical reaction between chlorine gas and hydrogen peroxide dissolved in a lye.

41. Chemically pumped oxygen-iodine laser operated with excitation energy transferred from an electronically excited oxygen gas to iodine atoms, characterized in that the chemically pumped oxygen-iodine laser (18) comprises a generator (20) as defined in any one of claims 1 to 24 for generating the electronically excited oxygen gas.

## Revendications

1. Générateur pour produire un gaz au moyen d'une réaction chimique entre un gaz éduit et un liquide, comprenant une enceints réactionnelle fermée, équipée d'une arrivée pour le liquide, d'une évacuation pour le liquide, d'une amenée pour le gaz éduit, d'une sortie pour le gaz produit, d'un bain de liquide disposé à l'intérieur de l'enceinte réactionnelle et d'un corps de substrat, qui est disposé de manière à pouvoir tourner dans l'enceinte réactionnelle et dont l'axe de rotation est disposé de telle sorte que pendant une rotation du corps de substrat, au moins une partie de la surface de ce corps pénètre dans le bain de liquide et ressort du bain de liquide, alternativement, en étant mouillée par la liquide, caractérisé en ce que le générateur (20) comprend un générateur d'écoulement (26) servant à produire un écoulement continu du liquide dans l'enceinte réactionnelle (22) et que le corps de substrat (102) comporte au moins un dispositif de captage d'impulsion (96;124;130;134;146,156) servant à recevoir une partie de l'impulsion de l'écoulement du liquide et produire un mouvement de rotation du corps de substrat (102) autour de son axe de rotation (88).

2. Générateur selon la revendication 1, caractérisé en ce que le générateur (20) comporte un dispositif pour produire un écoulement continu du gaz éduit dans l' enceints réactionnelle (22)

3. Générateur selon la revendication 2, caractérisé en ce que le corps de substrat (102) comprend au moins un élément de déviation (96;124;130;134,146,156) pour dévier l'écoulement du gaz éduit en direction de la surface du corps de substrat (102).

4. Générateur selon la revendication 2, caractérisé en ce que le ou les éléments de déviation (96;124;130;134;146,156) sont agencés de telle sorte qu'ils dévient l'écoulement du gaz éduit sensiblement sur toute la surface du corps de substrat (102).

5. Générateur selon la revendication 3 ou 4, caractérisé an ce que le dispositif de captage d'impulsion (96;124;130;134;146,156) sont agencés de manière à dévier l'écoulement du gaz éduit an direction de la surface du corps de substrat (102)

6. Générateur selon l'une des revendications précédentes, caractérisé en ce que le corps de substrat (102) comprend au moins un élément de déviation (96;124;130;134;146,156) servant à dévier un écoulement du gaz produit en direction de la sortie pour le gaz produit.

7. Générateur selon la revendication 6, caractérisé en ce que le ou les dispositifs de captage (96;124;130;134;146,156) sont agencés de manière à faire dévier un écoulement du gaz produit en direction de la sortie (112) pour le gaz produit.

8. Générateur selon l'une des revendications précédentes, caractérisé en ce que la forme de l'espace intérieur de l'enceinte réactionnelle (22) au-dessus du bain de liquide (118) disposé à l'intérieur de l'enceinte réactionnelle (22), s'adapte à la forme du corps de substrat (102).

9. Générateur selon l'une des revendications précédentes, caractérisé an ce que le corps de substrat (102) comporte un rouleau sensiblement cylindrique (144;154).

10. Générateur selon l'une des revendications précédentes, caractérisé en ce que le corps de substrat (102) comprend des disques (94) qui sont orientés transversalement par rapport à l'axe de rotation (88) du corps de substrat.

11. Générateur selon l'une des revendications précédentes, caractérisé an ce que le corps de substrat (102) comprend une multiplicité de poils (126).

12. Générateur selon l'une des revendications précédentes, caractérisé en ce que le dispositif de captage d'impulsion comprend au moins une aube directrice (96;124;130;134;146,156).

13. Générateur selon la revendication 12, caractérisé en ce que les aubes conductrices (96; 146; 156) sont cintrées.

14. Générateur selon l'une des revendications précédentes, caractérisé en ce que le dispositif de captage d'impulsion comprend au moins une hélice (130).

15. Générateur selon la revendication 14, caractérisé en ce que l'axe de symétrie de l'hélice (130) est orienté sensiblement parallèlement à la direction d'écoulement du liquide dans l'enceinte réactionnelle (22).

16. Générateur selon l'une des revendications précédentes, caractérisé en ce que le dispositif de captage d'impulsion comprend une vis sans fin (134).

17. Générateur selon la revendication 16, caractérisé en ce que l'axe de la vis sans fin est orienté sensiblement parallèlement à l'axe de rotation (88) du corps de substrat (102) et parallèlement à la direction de l'écoulement du liquide dans l'enceinte réactionnelle (22).

18. Générateur selon l'une des revendications précédentes, caractérisé en ce que le générateur (20) comprend un dispositif pour produire un écoulement du gaz éduit, qui pénètre dans l'enceinte réactionnelle (22) sensiblement parallèlement à l'axe de rotation (88) du corps de substrat (102).

19. Générateur selon l'une des revendications précédentes, caractérisé en ce que le générateur comprend un dispositif pour produire un écoulement du gaz éduit qui pénètre dans l'enceinte réactionnelle (22) sensiblement transversalement par rapport à l'axe de rotation (28) du corps de substrat (102).

20. Générateur selon l'une des revendications précédentes, caractérisé en ce que le générateur (20) comprend un corps de substrat (102) disposé de manière à pouvoir tourner dans l'enceinte réactionnelle (22).

21. Générateur selon la revendication 20, caractérisé an ce que le générateur (20) comprend au moins deux corps de substrat (102a, 102b) possédant des axes de rotation (88) parallèles l'un à l'autre.

22. Générateur selon la revendication 21, caractérisé en ce que deux corps de substrat (102a, 102b) possédant des axes de rotation (88) parallèles entre eux comprennent des dispositifs de captage d'impulsion (146,156) servant à produire une rotation de même sens des corps de substrat (102a,102b).

23. Générateur selon la revendication 20 ou 21, caractérisé an ce que deux corps de substrat (102a, 102b) possédant des axes de rotation (88) parallèles entre eux comprennent des dispositifs de captage d'impulsion (146,156) servant à produire des rotations des corps de substrat (102a,102b) en des sens opposés.

24. Générateur selon la revendication 23, caractérisé an ce que le générateur (20) comprend un dispositif pour produire un écoulement de gaz continu dans l'enceinte réactionnelle (22) et que les corps de substrat (102a,102b), qui tournent en des sens opposés, comprennent chacun au moins un élément de déviation (146,156) servant à dévier l'écoulement de gaz, ces éléments de déviation étant agencés de telle sorte que le ou les éléments de déviation (146) d'un corps de substrat (102a) appliquant à l'écoulement de gaz une impulsion de déviation, qui est dirigée en sens opposé d'une impulsion de déviation appliquée à l'écoulement de gaz par le ou les éléments de déviation (156) de l'autre corps de substrat (102b).

25. Utilisation du générateur selon l'une des revendications précédentes pour la production de gaz oxygène excité électroniquement, par réaction chimique entre du chlore gazeux et du peroxyde d'hydrogène dissous dans une lessive.

26. Procédé pour produire un gaz par réaction chimique entre un gaz éduit et un liquide, selon lequel le gaz éduit et le liquide sont envoyés à une enceinte réactionnelle fermée et le gaz produit et le liquide sont prélevés et un corps de substrat est entraîné en rotation dans l'enceinte réactionnelle autour d'un axe de rotation de telle sorte que pendant une rotation du corps de substrat, au moins une partie de la surface supérieure de ce corps pénètre dans un bain de liquide disposé dans l'enceinte réactionnelle et ressort du bain de liquide, alternativement, en étant mouillée par le liquide, caractérisé en ce qu'un écoulement continu du liquide est réalisée dans l'enceinte réactionnelle et qu'une partie de l'impulsion de l'écoulement du liquide est prélevée à l'aide d'au moins un dispositif de captage d'impulsion disposé sur le corps de substrat, de manière à produire le mouvement de rotation du corps de substrat.

27. Procédé selon la revendication 26, caractérisé on ce qu'un écoulement continu du gaz éduit est produit dans l'enceinte réactionnelle.

28. Procédé selon la revendication 27, caractérisé en ce que l'écoulement du gaz éduit est dévié en direction de la surface du corps de substrat à l'aide d'au moins un élément do renvoi disposé sur le corps de substrat.

29. Procédé selon la revendication 28, caractérisé en ce que le ou les éléments de déviation dirigent l'écoulement du gaz éduit essentiellement sur toute la surface du corps de substrat.

30. Procédé selon la revendication 28 ou 29, caractérisé en ce que l'écoulement du gaz éduit est dévié en direction de la surface du corps de substrat à l'aide du ou des dispositifs de captage d'impulsion.

31. Procédé selon l'une des revendications 26 à 30, caractérisé on ce qu'un écoulement du gaz produit est dévié vers l'extérieur de la chambre de réaction à l'aide d'au moins un élément de déviation disposé sur le corps de substrat.

32. Procédé selon la revendication 31, caractérisé an ce que l'écoulement du gaz produit est dévié vers l'extérieur de l'enceinte réactionnelle, à l'aide du ou des dispositifs de captage d'impulsion.

33. Procédé selon l'une des revendications 26 à 32, caractérisé en ce que le gaz éduit est injecté par soufflage essentiellement parallèlement à l'axe de rotation du corps de substrat, dans l'enceinte réactionnelle.

34. Procédé selon l'une des revendications 26 à 33, caractérisé en ce que le gaz éduit est injecté par soufflage sensiblement transversalement par rapport à l'axe de rotation du corps de substrat, dans l'enceinte réactionnelle.

35. Procédé selon l'une des revendications 26 à 34, caractérisé en ce que plusieurs corps de substrats disposés dans l'enceinte réactionnelle sont entraînés en rotation au moyen de l'écoulement du liquide.

36. Procédé selon la revendication 35, caractérisé en ce qu'au mains deux corps de substrats ayant des axes de rotation parallèles entre eux, sont entraînés en rotation.

37. Procédé selon l'une des revendications 36, caractérisé en ce que deux corps de substrats comportant des axes de rotation parallèles entre eux sont entraînés en rotation de façon décalée.

38. Procédé selon la revendication 36 ou 37, caractérisé en ce que deux corps de substrats possédant des axes de rotation parallèles entre eux sont entraînés en rotation dans des sens opposés.

39. Procédé selon la revendication 38, caractérisé on ce qu'un écoulement de gaz est produit dans l'enceinte réactionnelle et que l'écoulement de gaz reçoit, à l'aide d'au moins un élément de déviation disposé sur le corps de substrat, une impulsion de déviation qui est dirigée on sens opposé d'une impulsion de déviation appliquée à l'écoulement de gaz à l'aide d'au moins un autre élément de déviation disposé sur l'autre corps de substrat.

40. Procédé selon l'une des revendications 26 à 39, caractérisé on ce que comme gaz on produit du gaz oxygène excité électroniquement par réaction chimique entre du chlore gazeux et du peroxyde d'hydrogène dissous dans une lessive.

41. Laser chimique à oxygène-iode, qui fonctionne avec une énergie transmise par du gaz oxygène excité électroniquement à des atomes d'iode, caractérisé an ce que le laser chimique à oxygène-iode (18) comprend un générateur (20) selon l'une des revendications 1 à 24 pour la production du gaz oxygène excité électroniquement.
